(19) Europäisches Patentamt
European Patent Office
Office européen des brevets

(11) **EP 4 485 010 B1**

(12) **EUROPEAN PATENT SPECIFICATION**

(45) Date of publication and mention
of the grant of the patent:
**31.12.2025 Bulletin 2026/01**

(21) Application number: **22939327.7**

(22) Date of filing: **29.04.2022**

(51) International Patent Classification (IPC):
**G01S 19/42** (2010.01)    **H04W 64/00** (2009.01)
**G01S 5/02** (2010.01)    **H04W 76/14** (2018.01)

(52) Cooperative Patent Classification (CPC):
**G01S 5/0236; G01S 1/042; H04W 64/00;**
**H04W 76/14;** G01S 5/0226; G01S 2205/01

(86) International application number:
**PCT/CN2022/090579**

(87) International publication number:
**WO 2023/206480 (02.11.2023 Gazette 2023/44)**

(54) **POSITIONING METHOD AND APPARATUS FOR ABSOLUTE LOCATION, DEVICE, AND MEDIUM**

POSITIONIERUNGSVERFAHREN UND -VORRICHTUNG ZUR ABSOLUTEN POSITION, VORRICHTUNG UND MEDIUM

PROCÉDÉ ET APPAREIL DE POSITIONNEMENT POUR EMPLACEMENT ABSOLU, DISPOSITIF ET SUPPORT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**01.01.2025 Bulletin 2025/01**

(73) Proprietor: **GUANGDONG OPPO MOBILE TELECOMMUNICATIONS CORP., LTD.**
**Dongguan, Guangdong 523860 (CN)**

(72) Inventors:
• **ZHANG, Shichang**
**Dongguan, Guangdong 523860 (CN)**

• **MA, Teng**
**Dongguan, Guangdong 523860 (CN)**

(74) Representative: **Novagraaf Technologies**
**Bâtiment O2**
**2, rue Sarah Bernhardt**
**CS90017**
**92665 Asnières-sur-Seine Cedex (FR)**

(56) References cited:
WO-A1-2021/167715    WO-A1-2021/232228
CN-A- 102 149 070    CN-A- 102 196 558
CN-A- 108 093 360    CN-A- 110 958 685
CN-A- 110 958 685    CN-A- 114 222 931
CN-A- 114 222 931    US-A1- 2021 219 104
US-A1- 2022 077 990    US-A1- 2023 104 211
US-A1- 2023 209 494    US-A1- 2024 295 626

**Description**

**TECHNICAL FIELD**

The present disclosure relates to the field of communication technologies, and in particular, relates to a method and apparatus for positioning an absolute location, and a chip thereof.

**BACKGROUND**

In sidelink (SL) communication, a terminal needs to rely on a positioning reference signal (PRS) transmitted over a sidelink and a Uu link or transmitted only by the sidelink to determine its absolute geographic location information.

Document WO2021167715A1 discloses a user equipment. The user equipment includes: an interface; a memory; and a processor, communicatively coupled to the interface and the memory, configured to: receive a plurality of requests to process a corresponding plurality of positioning reference signal (PRS) groups, each of the plurality of PRS groups having respective PRS characteristics; determine a priority for processing the plurality of PRS groups according to at least one priority criterion; determine whether a total amount of the PRS characteristics of the plurality of PRS groups exceeds a PRS processing capability of the processor; select, in response to the total amount of the PRS characteristics exceeding the PRS processing capability of the processor, a subset of the plurality of PRS groups based on the priority for processing; and process the subset of the plurality of PRS groups to determine position information.

Document WO2021/232228A1 discloses a user equipment configured for wireless signal exchange. The user equipment includes: a transceiver configured to transmit outbound signals wirelessly and receive inbound signals wirelessly; a memory; and a processor, communicatively coupled to the transceiver and the memory, and configured to at least one of: measure an uplink positioning reference signal received from the transceiver, the uplink positioning reference signal having an uplink channel configuration; or measure a first sidelink positioning reference signal received from the transceiver, the first sidelink positioning reference signal having a first sidelink channel configuration; or send a second sidelink positioning reference signal via the transceiver, the second sidelink positioning reference signal having a second sidelink channel configuration.

Document CN114222931A discloses a positioning method performed by a first terminal. The method includes: sending a capability request message to a second terminal, wherein the capability request message is configured to request at least one of sidelink-downlink time difference of arrival (SL-DL TDOA) capability information, sidelink angle of arrival (SL-AOA) capability information, sidelink round trip time (SL-RTT) capability information, or sidelink-uplink time difference of arrival (SL-UL TDOA) capability information; and receiving a capability provision message sent by the second temlinal, wherein the capability provision message comprises at least one of SL-DL TDOA capability information per sidelink band, SL-AOA capability information per sidelink band, SL-RTT capability information per sidelink band, or SL-UL TDOA capability infor-mation per sidelink band.

Document US2022/0077990 Al discloses that a first UE transmits SL-PRS to a second UE based on a bandwidth associated with DL-PRS(s) from one or more gNBs to the second UE in association with a positioning procedure of the second UE. In other aspects, a network component (e.g., LMF UE, etc.) triggers transmis-sion of a WLAN ranging signal from a first UE to a second UE (e.g., to supplement an NR-based positioning procedure).

**SUMMARY**

Embodiments of the present disclosure provide a method and apparatus for positioning an absolute location, and a chip thereof.

According to some embodiments of the present disclosure, a method for positioning an absolute location is provided. The method includes: receiving a positioning assistance message, wherein the positioning assistance message indicates a transmission mode of a positioning reference signal (PRS), the positioning assistance message is transmitted in one-to-one correspondence prior to a transmission of the PRS indicated by the positioning assistance message, and a sidelink resource of the positioning assistance message is spaced apart by a second duration from a transmission resource of the PRS indicated by the positioning assistance message, wherein the second duration is predefined by a communication protocol, or configured or pre-configured by a network device; receiving the PRS based on the positioning assistance message; and calculating an absolute positioned location of the target terminal based on the PRS.

According to some embodiments of the present disclosure, a method for positioning an absolute location is provided. The method includes: transmitting a positioning assistance message and a PRS to a target terminal; wherein the positioning assistance message indicates a transmission mode of the PRS, the PRS is configured to position an absolute location of the target terminal, the positioning assistance message is transmitted in one-to-one correspondence prior to a transmission of the PRS indicated by the positioning assistance message, and a sidelink resource of the positioning assistance message is spaced apart by a second duration from a transmission resource of the PRS indicated by the positioning assistance message, wherein the second duration is predefined by a communication protocol, or configured or pre-configured by a network device.

According to some embodiments of the present disclosure, an apparatus for positioning an absolute location is provided. The apparatus includes: a receiving module, configured to receive a positioning assistance message, wherein the positioning assistance message indicates a transmission mode of a PRS, the positioning assistance message is transmitted in one-to-one correspondence prior to a transmission of the PRS indicated by the positioning assistance message, and a sidelink resource of the positioning assistance message is spaced apart by a second duration from a transmission resource of the PRS indicated by the positioning assistance message, wherein the second duration is predefined by a communication protocol, or configured or pre-configured by a network device; and receive the PRS based on the positioning assistance message; and a processing module, configured to calculate an absolute positioned location of the apparatus based on the PRS.

According to some embodiments of the present disclosure, an apparatus for positioning an absolute location is provided. The apparatus includes: a transmitting module, configured to transmit a positioning assistance message and a PRS to a target terminal; wherein the positioning assistance message indicates a transmission mode of the PRS, the PRS is configured to position an absolute location of the target terminal, the positioning assistance message is transmitted in one-to-one correspondence prior to a transmission of the PRS indicated by the positioning assistance message, and a sidelink resource of the positioning assistance message is spaced apart by a second duration from a transmission resource of the PRS indicated by the positioning assistance message, wherein the second duration is predefined by a communication protocol, or configured or pre-configured by a network device.

According to an aspect of the present disclosure, a chip is provided. The chip includes a programmable logic circuit and/or one or more program instructions. The chip, when running, is configured to perform the method for positioning an absolute location as defined above.

## BRIEF DESCRIPTION OF THE DRAWINGS

For clearer descriptions of the technical solutions according to the embodiments of the present disclosure, the following briefly describes accompanying drawings required for describing the embodiments. Apparently, the accompanying drawings in the following description illustrate merely some embodiments of the present disclosure, and those of ordinary skill in the art may still derive other accompanying drawings from these accompanying drawings without creative efforts.

FIG. 1 is a schematic diagram of an operating scenario of a sidelink transmission in a related art;
FIG. 2 is a schematic diagram of an operating scenario of a sidelink transmission in the related art;
FIG. 3 is a schematic diagram of an operating scenario of a sidelink transmission in the related art;
FIG. 4 is a schematic diagram of an operating scenario of a sidelink transmission in the related art;
FIG. 5 is a schematic diagram of an operating scenario of a sidelink transmission in the related art;
FIG. 6 is a schematic diagram of an operating scenario of a sidelink transmission in the related art;
FIG. 7 is a schematic diagram of a portion of symbols configured for an SL transmission in one slot in the related art;
FIG. 8 is a schematic diagram of a slot structure of physical sidelink control channel (PSCCH) and physical sidelink shared channel (PSSCH) in the related art;
FIG. 9 is a schematic diagram of time domain locations of four demodulation reference signal (DMRS) symbols in the case that the number of PSSCH symbols is thirteen in the related art;
FIG. 10 is a schematic diagram of a frequency domain location of the PSSCH DMRS in the related art;
FIG. 11 is a schematic diagram of a system for positioning an absolute location according to some embodiments of the present disclosure;
FIG. 12 is a flowchart of a method for positioning an absolute location according to some embodiments of the present disclosure;
FIG. 13 is a flowchart of a method for positioning an absolute location according to some embodiments of the present disclosure;
FIG. 14 is a schematic diagram of a method for positioning an absolute location according to some embodiments of the present disclosure;
FIG. 15 is a schematic diagram of a method for positioning an absolute location according to some embodiments of the present disclosure;
FIG. 16 is a flowchart of a method for positioning an absolute location according to some embodiments of the present disclosure;
FIG. 17 is a schematic diagram of a method for positioning an absolute location according to some embodiments of the present disclosure;
FIG. 18 is a schematic diagram of a method for positioning an absolute location according to some embodiments of the present disclosure;

FIG. 19 is a schematic diagram of a resource pool of a PRS according to some embodiments of the present disclosure;

FIG. 20 is a schematic diagram of a transmission resource of a PRS according to some embodiments of the present disclosure;

FIG. 21 is a schematic diagram of a method for positioning an absolute location according to some embodiments of the present disclosure;

FIG. 22 is a schematic diagram of a method for positioning an absolute location according to some embodiments of the present disclosure;

FIG. 23 is a schematic diagram of a method for positioning an absolute location according to some embodiments of the present disclosure;

FIG. 24 is a schematic diagram of a method for positioning an absolute location according to some embodiments of the present disclosure;

FIG. 25 is a schematic diagram of a method for positioning an absolute location according to some embodiments of the present disclosure;

FIG. 26 is a schematic diagram of a method for positioning an absolute location according to some embodiments of the present disclosure;

FIG. 27 is a structural block diagram of an apparatus for positioning an absolute location according to some embodiments of the present disclosure;

FIG. 28 is a structural block diagram of an apparatus for positioning an absolute location according to some embodiments of the present disclosure; and

FIG. 29 is a structural schematic diagram of a communication device for positioning an absolute location according to some embodiments of the present disclosure.

## DETAILED DESCRIPTION

For clearer descriptions of the objectives, technical solutions, and advantages of the present disclosure, embodiments of the present disclosure are further described in detail hereinafter with reference to the accompanying drawings. Illustrative embodiments are described herein in detail and illustrated in the accompanying drawings. In the case that the following description relates to the accompanying drawings, the same numerals in different accompanying drawings indicate the same or similar elements unless otherwise indicated. The implementations described in the following illustrative embodiments do not represent all embodiments consistent with the present disclosure. Rather, these illustrative embodiments are only examples of apparatuses and methods consistent with some aspects of the disclosure or as detailed in the appended claims.

The terms in the present disclosure are used only for the purpose of describing particular embodiments but are not intended to limit the present disclosure. The singular forms of "a," "said," and "the" as used in the present disclosure and the appended claims are also intended to encompass the plural form, unless the context indicates a different meaning. It should also be understood that the phrase "and/or" as used herein refers to and encompasses any or all possible combinations of one or more of the associated listed items.

It should be understood that even the terms "first," "second," "third," and the like may be used in the present disclosure to describe various pieces of information, such information should not be limited by these terms. These terms are used only to distinguish the same type of information. In some embodiments, without departing from scope of the present disclosure, first information may be referred to as second information in some embodiments, and similarly, second information may be referred to as first information in some embodiments. Depending on the context, as used herein, a phrase "if" is interpreted as "in the case that ...," "when ...," or "in response to determining... "

First, the relevant technical background involved in the embodiments of the present disclosure is described.

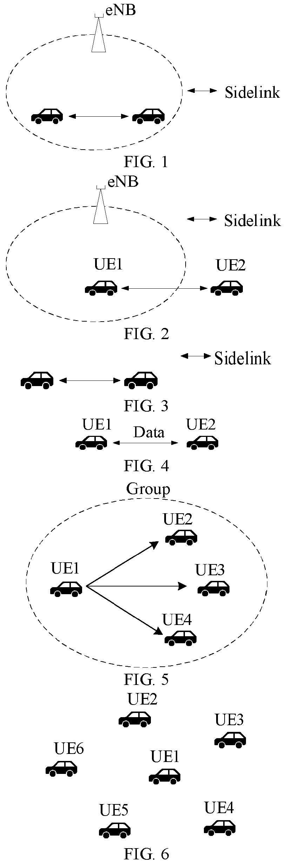

Depending on a network coverage situation of an end user equipment (UE) that conducts communications, the sidelink communications are categorized into a network coverage sidelink communication, a partial network coverage sidelink communication, and a sidelink communication out of network coverage as illustrated in FIG. 1, FIG. 2, and FIG. 3, respectively.

As illustrated in FIG. 1, in the network coverage sidelink communication, all terminals performing sidelink communications are within the coverage region of the same base station, such that all of the above terminals perform sidelink communications based on the same sidelink configuration by receiving configuration signaling from the base station. As illustrated in FIG. 2, in the partial network coverage sidelink communication, some of the terminals performing sidelink communications are within the coverage region of the base station, and these terminals are capable of receiving the configuration signaling from the base station and perform sidelink communications based on the configuration from the base station. The terminals located outside the network coverage cannot receive the configuration signaling from the base station, therefore the terminals located outside the network coverage determine sidelink configuration and perform sidelink communications based on pre-configuration information and information carried in the physical sidelink broadcast channel (PSBCH) transmitted by the terminal within the network coverage. As illustrated in FIG. 3, with respect to the sidelink communication out of network coverage, all terminals that perform the sidelink communications are outside the network coverage, and all terminals determine the sidelink configuration and perform the sidelink communications based on the pre-configuration information.

Device to Device (D2D)/Vehicle to Everything (V2X):

The Device to Device communication is a sidelink (SL) transmission technology based on the D2D, which is different from the traditional cellular system in which communication data is received or transmitted over a base station, and thus has higher spectral efficiency and lower transmission delay. The Vehicle to Everything systems adopt a direct terminal-to-terminal communication, and two transmission modes are defined in 3rd generation partnership project (3GPP): a first mode and a second mode.

The first mode: a transmission resource of a terminal is allocated by a base station, and the terminal transmits data on the sidelink based on the resource allocated by the base station. The base station is capable of allocating the resource of a single transmission for the terminal, or allocating the resource of a semi-static transmission for the terminal. As illustrated in FIG. 1, the terminal is within the network coverage, and the network allocates the transmission resource of the sidelink transmission for the terminal.

The second mode: the terminal selects a resource within a resource pool for data transmission. As illustrated in FIG. 3, the terminal is outside a cell coverage, and the terminal autonomously selects a transmission resource within a preconfigured resource pool for sidelink transmission; or as illustrated in FIG. 1, the terminal autonomously selects a transmission resource within a resource pool configured by the network for a sidelink transmission.

The resource selection under the second mode includes the following two processes.

Process 1: The terminal takes all available resources in a resource selection window as a resource set A.

In the case that the terminal transmits data in some slots within a sensing window without sensing, all resources on slots, corresponding to the slots within the sensing window, within a selection window are excluded. The terminal determines the corresponding slots within the selection window based on a set of values of a resource reservation period field in a resource pool configuration used by the terminal.

In the case that the terminal senses a physical sidelink control channel (PSCCH) within the sensing window, a reference signal received power (RSRP) of the PSCCH or an RSRP of a physical sidelink shared channel (PSSCH) scheduled by the PSCCH is measured. In the case that the measured RSRP is greater than an SL-RSRP threshold, and it is determined, based on resource reservation information in the sidelink control information transmitted in the PSCCH, that the reserved resource indicated by the resource reservation information is within the resource selection window, then the resource corresponding the resource reservation information is excluded from the resource set A. In the case that the remaining resource in the resource set A is less than X % of all the resources in the resource set A prior to the resource exclusion being performed on the resource set A, the SL-RSRP threshold is increased by 3 dB, and the process 1 is performed again. The possible values of the above X are {20, 35, 50}, and the terminal determines the parameter X from the set of values based on a priority of the data to be transmitted. At the same time, the above SL-RSRP threshold is related to a priority carried in the PSCCH that is sensed by the terminal and a priority of the data to be transmitted by the terminal. The terminal takes the remaining resource in the set A upon the resource exclusion as a candidate resource set.

Process 2: The terminal randomly selects a number of resources from the candidate resource set as the transmission resources of an initial transmission and retransmission of the terminal.

New Radio (NR)-V2X:

In the NR-V2X, automatic driving needs to be supported, and therefore higher requirements are imposed on data interaction between vehicles, such as higher throughput, lower latency, higher reliability, larger coverage, and more flexible resource allocation.

In long-term evolution (LTE)-V2X, broadcast transmission mode is supported, and in the NR-V2X, unicast and multicast transmission modes are introduced. For the unicast transmission, a receiver terminal includes only one terminal. As illustrated in FIG. 4, the unicast transmission is performed between UE 1 and UE 2. For multicast transmission, the receiver terminal includes all terminals within a communication group or all terminals within a specific transmission distance. As illustrated in FIG. 5, UE 1, UE 2, UE 3, and UE 4 constitute a communication group, in which the UE 1 transmits data, and all the other terminal devices in the group are receiver terminals. For the broadcast transmission mode, the receiver terminal includes any terminal around the transmitter terminal. As illustrated in FIG. 6, UE 1 is the transmitter terminal, and the other terminals around UE 1: UE 2, UE 3, UE 4, UE 5, and UE 6 are all receiver terminals.

Slot structure in NR-V2X:

In the NR-V2X, the PSSCH and the PSCCH associated with the PSSCH are transmitted in the same slot, and the PSCCH occupies two or three time domain symbols. The time domain resources in the NR-V2X are allocated by taking the slot as the allocation granularity. The start point and length of the time domain symbols for the sidelink transmission in one slot are configured by the parameters sidelink start symbols (SL-StartSymbols) and sidelink length symbols (SL-LengthSymbols). The last symbol in the time domain symbols is used as a guard period (GP), and only the rest of the time domain symbols are available for the PSSCH and PSCCH. However, in the case that one slot is configured with a physical sidelink feedback channel (PSFCH) transmission resource, the PSSCH and PSCCH cannot occupy the time domain symbols configured for the PSFCH transmission, as well as an automatic gain control (AGC) symbol and the GP symbol before the symbols configured for the PSFCH transmission.

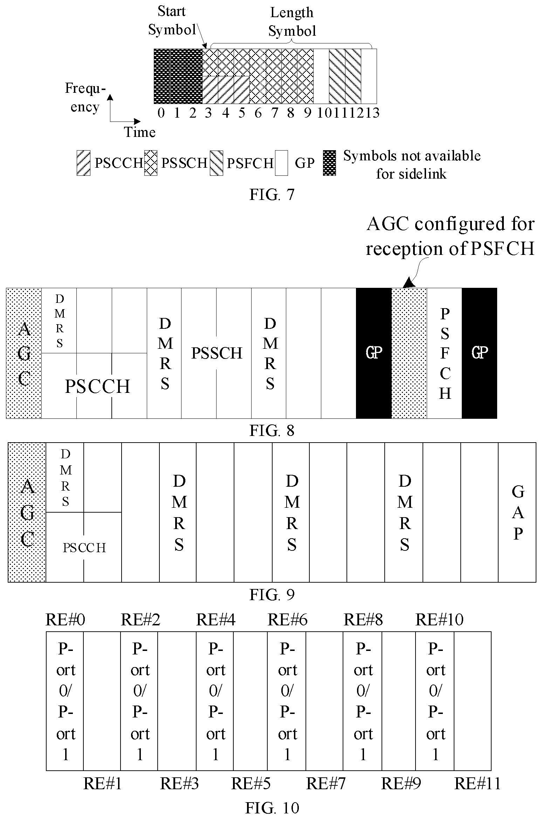

As illustrated in FIG. 7, the network configures SL-StartSymbols=3 and SL-LengthSymbols=11, i.e., 11 time domain symbols starting from symbol index 3 (symbols 3 to 13) are available for the sidelink transmission in one slot. The slot has the resource of the PSFCH transmission, which occupies symbols 11 and 12, with the symbol 11 serving as the AGC symbol of the PSFCH, and symbols 10 and 13 serving as GPs. The time domain symbols that are available for the PSSCH transmission are symbols 3 to 9, and the PSCCH occupies three time domain symbols, i.e., symbols 3, 4, and 5, with the symbol 3 serving as the AGC symbol.

In addition to the PSCCH and the PSSCH, the PSFCH is also possible within one sidelink slot in the NR-V2X, as illustrated in FIG. 8. It can be seen that within one slot, a 1st orthogonal frequency division multiplexing (OFDM) symbol is fixed to be configured for AGC, and on the AGC symbol, the UE replicates information transmitted on a 2nd symbol. One symbol is reserved at the end of the slot for switching transmitting and receiving, which is configured for the UE to switch from a transmitting (or receiving) state to a receiving (or transmitting) state. Among the remaining OFDM symbols, the PSCCH is capable of occupying two or three OFDM symbols starting from the 2nd sidelink symbol, and in the frequency domain, the number of physical resource blocks (PRBs) occupied by the PSCCH is within a sub-band of one PSSCH. In the case that the number of PRBs occupied by the PSCCH is less than a size of a sub-channel of the PSSCH, or, the frequency domain resources of the PSSCH include multiple sub-channels, then the PSCCH can be frequency division multiplexed with the PSSCH on the OFDM symbol where the PSCCH is located.

The demodulation reference signal (DMRS) symbol for the PSSCH in the NR-V2X draws on the design of User-Equipment universal terrestrial radio access network (UTRAN) (Uu) interface, which employs a plurality of time domain PSSCH DMRS patterns. The number of DMRS patterns that are available within one resource pool is related to the number of PSSCH symbols within the resource pool. For a specific number of PSSCH symbols (including the 1st AGC symbol) and a specific number of PSCCH symbols, the available DMRS patterns and the position of each DMRS symbol within the pattern are illustrated in Table 1. A schematic of the time domain locations of four DMRS symbol in the case that the number of PSSCH symbols is thirteen is illustrated in FIG. 9.

Table 1 Number and location of DMRS symbols with different PSSCH and PSCCH symbol numbers

| Number of PSSCH symbols (including the 1st AGC symbol) | Locations of DMRS symbols (relative to the location of the 1st AGC symbol ) | | | | | |
| | Number of PSCCH symbols being 2 | | | Number of PSCCH symbols being 3 | | |
| | Number of DMRS symbols | | | Number of DMRS symbols | | |
| | 2 | 3 | 4 | 2 | 3 | 4 |
| 6 | 1, 5 | | | 1, 5 | | |
| 7 | 1, 5 | | | 1, 5 | | |
| 8 | 1, 5 | | | 1, 5 | | |
| 9 | 3, 8 | 1, 4, 7 | | 4, 8 | 1, 4, 7 | |
| 10 | 3, 8 | 1,4,7 | | 4, 8 | 1,4,7 | |
| 11 | 3, 10 | 1,5,9 | 1, 4, 7, 10 | 4, 10 | 1,5,9 | 1, 4, 7, 10 |
| 12 | 3, 10 | 1,5,9 | 1, 4, 7, 10 | 4, 10 | 1,5,9 | 1, 4, 7, 10 |
| 3 | 3, 10 | 1, 6, 11 | 1, 4, 7, 10 | 4, 10 | 1, 6, 11 | 1, 4, 7, 10 |

In the case that the plurality of time domain DMRS patterns are configured in the resource pool, the specific time domain DMRS pattern to be adopted is selected by a transmit UE and indicated in first-stage sidelink control information (SCI). Such a design allows a high density DMRS pattern to be selected by a UE with high speed motion, thereby ensuring an accuracy of channel estimation; whereas for a UE with low speed motion, a low density DMRS pattern is adopted, thereby improving the spectral efficiency.

The generation of the PSSCH DMRS sequence is almost same to the generation of the PSCCH DMRS sequence, and the only difference lies in: $N_{ID} = \sum_{i=0}^{L-1} p_i \cdot 2^{L-1-i}$ in an initialization formula Cinit of a pseudo-random sequence c(m), wherein pi represents an ith bit of cyclic redundancy check (CRC) of the PSCCH scheduling the PSSCH, and L=24, representing the number of bits of PSCCH CRC.

Two frequency domain DMRS patterns, i.e., DMRS frequency domain type 1 and DMRS frequency domain type 2, are supported in the NR physical downlink shared channel (PDSCH) and physical uplink shared channel (PUSCH), and for each of the frequency domain types, there are two different types of single DMRS symbol and dual DMRS symbols. The single-symbol DMRS frequency domain type 1 supports four DMRS ports, the single-symbol DMRS frequency domain type 2 supports six DMRS ports, and the number of supported ports is doubled in both cases of dual DMRS symbols. However, in the NR-V2X, only single-symbol DMRS frequency domain type 1 is supported, as illustrated in FIG. 10, because the PSSCH needs to support at most two DMRS ports.

Positioning based on the sidelink:

The positioning based on the sidelink is one of improved schemes of R18 positioning technology. In this topic, the scenarios and requirements to support NR positioning application cases in-coverage, partial-coverage, and out-of-coverage of cellular networks are considered, and the positioning requirements of V2X application cases, public safety application cases, commercial application cases, and industrial Internet of things (IIOT) application cases are considered. Further, supports for the following functions are considered: absolute positioning, ranging/direction measurement, and relative positioning; investigating a positioning method based on the combination of sidelink measurement results and Uu interface measurement results; investigating sidelink positioning reference signals, including signal design, physical layer control signaling, resource allocation, physical layer measurement results, and associated physical layer processes, or the like; and investigating a positioning system architecture and signaling processes, such as configuration, measurement, and reporting, etc.

However, no solution is available on how the terminal achieves absolute positioning using the sidelink, or the sidelink and the Uu link in a related art.

It should be understood that in some embodiments of the present disclosure, "NR" is also referred to as a 5th generation mobile communication technology (5G) NR system or a 5G system. The technical solutions according to some embodiments of the present disclosure are applicable to the 5G NR system, subsequent evolved systems of the 5G NR system, or 6th generation mobile communication technology (6G) and subsequent evolved systems.

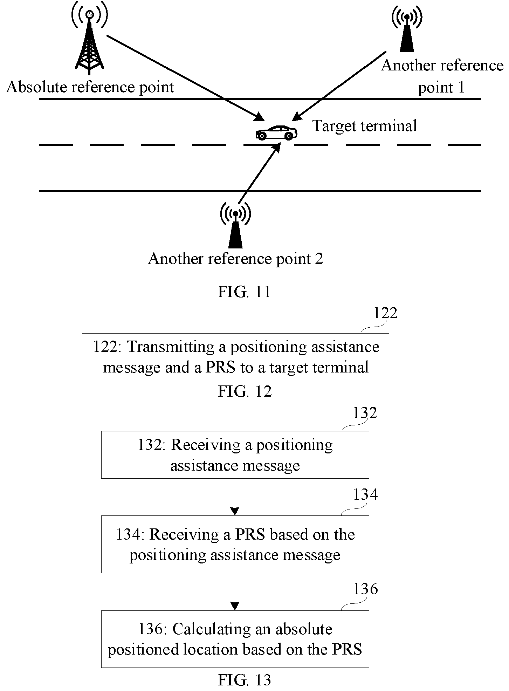

FIG. 11 is a schematic diagram of a positioning system for an absolute location according to some embodiments of the present disclosure.

At least three reference points and at least one target terminal are present in some embodiments, wherein the at least three reference points include at least one absolute reference point and at least two other reference points, the absolute reference point being a reference synchronization source for the at least two other reference points. The reference point is a device that transmits a positioning reference signal (PRS) configured to determine location information.

The target terminal receives a positioning assistance message and/or the PRS from the reference point, wherein the positioning assistance message indicates a transmission mode of the PRS. In some embodiments, the positioning assistance message is radio resource control (RRC) signaling, medium access control (MAC) signaling, or physical layer signaling. In some embodiments, the positioning assistance message is transmitted in a unicast, multicast, or broadcast mode.

In some embodiments, the reference point is a network device, wherein the network device includes at least one of: a network device, a road side unit (RSU), a location management function (LMF), or a transmission reception point (TRP). In the case that the reference point is the network device, the reference point transmits the positioning assistance message and/or a downlink positioning reference signal (DL-PRS) to the target terminal. In some embodiments, the positioning assistance message is carried on the RRC signaling and then transmitted. The specific transmission mode for the DL-PRS is not described in detail in the present disclosure, which can refer to the DL-PRS transmission mode in the related art.

In some embodiments, the reference point is a terminal, wherein the terminal is a handheld terminal, a vehicle terminal, an IoT device, or the like.

In some embodiments, the reference point is categorized as a mobile reference point or a fixed reference point based on whether an absolute location of the reference point is fixed. In some embodiments, at least three of the above-mentioned reference points are fixed reference points; or at least one of the reference points is a fixed reference point; or the absolute reference point is a fixed reference point; or at least one of the reference points is a mobile reference point; or all of the reference points are mobile reference points.

In the case that the reference point is the terminal, the reference point transmits the positioning assistance message and/or a sidelink positioning reference signal (SL-PRS) to the target terminal. In some embodiments, the positioning assistance message is transmitted over a first-stage or second-stage sidelink control information (SCI). The following describes a method for positioning an absolute location of a target terminal in the case that the reference point is the terminal.

FIG. 12 is a flowchart of a method for positioning an absolute location according to some embodiments of the present disclosure, which is illustrated by applying the method to a reference point. The method includes at least some of the following processes.

In process 122, a positioning assistance message and a PRS are transmitted to a target terminal.

The reference point transmits the positioning assistance message and the PRS to the target terminal. The PRS is a reference signal configured for positioning the target terminal, and the positioning assistance message indicates a transmission mode of the PRS.

In some embodiments, the reference point is a network device, and the reference point transmits the positioning assistance message by autonomously selecting a transmission resource within a resource pool. In some embodiments, the reference point is a terminal, and the reference point determines the transmission mode of the positioning assistance message by receiving an allocation from the configuration node, or the reference point autonomously selects a transmission resource within the resource pool to transmit the positioning assistance message. In some embodiments, the configuration node is a network device, an absolute reference point, or another terminal.

In some embodiments, the reference point is a network device, and the reference point transmits the DL-PRS by autonomously selecting a transmission resource within the resource pool. In some embodiments, the reference point is a terminal, and the reference point determines a transmission mode of the SL-PRS by receiving an allocation from the configuration node, or the reference point autonomously selects a transmission resource within the resource pool to transmit the SL-PRS. In some embodiments, the configuration node is a network device, an absolute reference point, or another terminal.

In some embodiments, the transmission mode of the PRS includes at least one of: a resource pool of the PRS; a transmission period of the PRS; a time domain location of a resource configured for a first transmission of the PRS during each transmission period; the number of transmissions of the PRS during each transmission period; a time interval between two adjacent transmissions of the PRS; a comb interval of the PRS; a frequency domain location of the PRS; a bandwidth of the PRS; or a sequence identifier (ID) of the PRS.

In some embodiments, the time interval between two adjacent transmissions of the PRS is a slot or an OFDM symbol, and the sequence ID of the PRS is configured to generate a PRS sequence of the reference point. At least one of the transmission period of the PRS, the time domain location of the resource configured for the first transmission of the PRS during each transmission period, the number of transmissions of the PRS during each transmission period, or the time interval between two adjacent transmissions of the PRS is carried in a scenario of periodic transmissions of the PRS.

In some embodiments, a resource pool to which the transmission resource of the positioning assistance message belongs is the same as, overlapped with, or different from a resource pool to which the transmission resource of the PRS belongs. In some embodiments, the transmission resource of the SL-PRS is configured to transmit the PSCCH and/or the PSSCH. In some embodiments, the positioning assistance message is carried in a second-stage SCI of the PSCCH or the PSSCH.

In summary, according to the embodiments of the present disclosure, the absolute positioning of the target terminal is supported in the sidelink communication by transmitting the positioning assistance message and the positioning reference signal to the target terminal.

FIG. 13 is a flowchart of a method for positioning an absolute location according to some embodiments of the present disclosure, which is illustrated by applying the method to a target terminal. The method includes at least some of the following processes.

In process 132, the target terminal receives a positioning assistance message.

The target terminal receives the positioning assistance message from an absolute reference point and/or another reference point.

In some embodiments, the reference point is a network device, and the reference point transmits the positioning assistance message by autonomously selecting a transmission resource within a resource pool. In some embodiments, the reference point is a terminal, and the reference point determines a transmission mode of the positioning assistance message by receiving an allocation from a configuration node, or the reference point autonomously selects a transmission resource within the resource pool to transmit the positioning assistance message. In some embodiments, the configuration node is a network device, an absolute reference point, or another terminal.

In process 134, the target terminal receives a PRS based on the positioning assistance message.

The target terminal receives PRSs from the absolute reference point and the another reference point based on the received positioning assistance message. The PRS is a reference signal configured for positioning the target terminal and transmitted from the reference point to the target terminal.

In some embodiments, the reference point is a network device, and the reference point transmits the DL-PRS by autonomously selecting a transmission resource within a resource pool. In some embodiments, the reference point is a terminal, and the reference point determines a transmission mode of the SL-PRS by receiving an allocation from the configuration node, or the reference point autonomously selects a transmission resource within the resource pool to transmit the SL-PRS. In some embodiments, the configuration node is a network device, an absolute reference point, or another terminal.

In some embodiments, the transmission mode of the PRS includes at least one of: a resource pool of the PRS; a transmission period of the PRS; a time domain location of a resource configured for a first transmission of the PRS during each transmission period; the number of transmissions of the PRS during each transmission period; a time interval between two adjacent transmissions of the PRS; a comb interval of the PRS; a frequency domain location of the PRS; a bandwidth of the PRS; or a sequence ID of the PRS.

In some embodiments, the time interval between two adjacent transmissions of the PRS is a slot or an OFDM symbol, and the sequence ID of the PRS is configured to generate a PRS sequence of the reference point. At least one of the transmission period of the PRS, the time domain location of the resource configured for the first transmission of the PRS during each transmission period, the number of transmissions of the PRS during each transmission period, or the time interval between two adjacent transmissions of the PRS is carried in a scenario of periodic transmissions of the PRS.

In some embodiments, a resource pool to which the transmission resource of the positioning assistance message belongs is the same as, overlapped with, or different from a resource pool to which the transmission resource of the PRS belongs. In some embodiments, the transmission resource of the SL-PRS is configured to transmit the PSCCH and/or the PSSCH. In some embodiments, the positioning assistance message is carried in a second-stage SCI of the PSCCH or the PSSCH.

In some embodiments, the target terminal receives the SL-PRS based on a last received positioning assistance message.

In process 136, an absolute positioned location of the target terminal is calculated based on the PRS.

The absolute positioned location of the target terminal is calculated based on the PRS. The absolute positioned location is referred to a specific geographic location acquired by positioning, such as a latitude and longitude location.

In summary, according to the method provided in the embodiments, by adopting flexible reception methods for positioning reference signals in the sidelink communication, positioning reference signals from different reference points are received under different sidelink communication conditions, thereby achieving absolute positioning of the target terminal.

In the present disclosure, the transmission mode of the positioning assistance message is categorized into at least two types: proactive transmission by the reference point and passive transmission by the reference point.

Type 1: The reference point proactively transmits the positioning assistance message.

For example, the absolute reference point transmits a first positioning assistance message, and the at least two other reference points transmit second positioning assistance messages. That is, each of the reference points transmits a positioning assistance message on its own.

For another example, the absolute reference point transmits a third positioning assistance message and the at least two other reference points do not need to transmit positioning assistance messages. That is, the positioning assistance message is transmitted by the absolute reference point uniformly.

Type 2: The target terminal transmits the PRS, which triggers the reference point to transmit the positioning assistance message.

For example, upon transmitting a third PRS, the target terminal triggers the absolute reference point to transmit the first positioning assistance message, and triggers the at least two other reference points to transmit the second positioning assistance messages.

For another example, upon transmitting a third PRS, the target terminal triggers the absolute reference point to transmit the third positioning assistance message and the PRS simultaneously.

Type 1: The reference point proactively transmits the PRS.

The following are embodiments in which the absolute reference point transmits the first positioning assistance message and the at least two other reference points transmit the second positioning assistance messages.

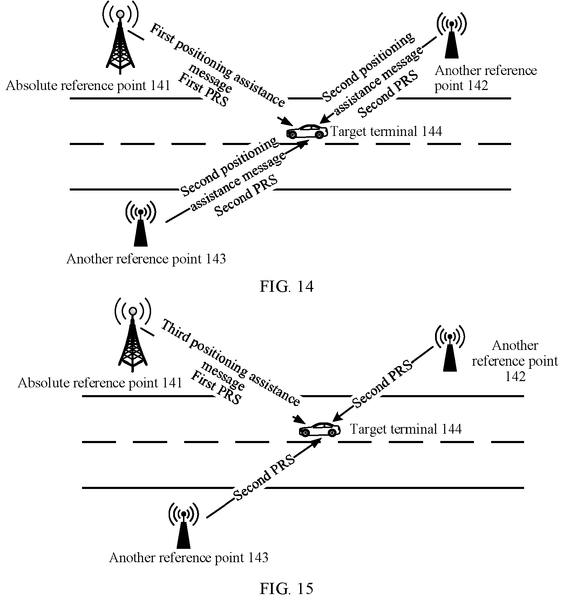

FIG. 14 is a schematic diagram of a method for positioning an absolute location according to some embodiments of the present disclosure, which is illustrated by applying the method to a target terminal.

The absolute reference point 141 transmits the first positioning assistance message to the target terminal 144, wherein the first positioning assistance message indicates a transmission mode of a first PRS transmitted by the absolute reference point 141. Another reference point 142 and another reference point 143 transmit second positioning assistance messages to the target terminal 144, and the second positioning assistance messages indicate transmission modes in which the another reference point 142 and the another reference point 143 transmit second PRSs.

In some embodiments, the first positioning assistance message further carries an absolute location of the absolute reference point 141. The second positioning assistance message further carries at least one of: absolute locations of the another reference point 142 and the another reference point 143, relative locations of the another reference point 142 and the another reference point 143 with respect to the absolute reference point 141, or timing offsets of the another reference point 142 and the another reference point 143 with respect to the absolute reference point 141.

In some embodiments, the absolute location of the absolute reference point 141 refers to a latitude and longitude location of the absolute reference point 141, the absolute location of the another reference point refers to a latitude and longitude location of the another reference point, the relative location of the another reference point with respect to the absolute reference point 141 refers to an offset value of the another reference point with respect to the absolute reference point 141, and the timing offset of the another reference point with respect to the absolute reference point 141 refers to a deviation value of the another reference point with respect to a reference time of the absolute reference point 141.

In some embodiments, the first positioning assistance message and the second positioning assistance message carry the same or separate information items, i.e., each of the first positioning assistance message and the second positioning assistance message independently carry a positioning assistance message of one reference point.

In some embodiments, the information item carried by the second positioning assistance message includes differential information of the second positioning assistance message relative to the first positioning assistance message. That is, the second positioning assistance message carries information that is different from the first positioning assistance message, information not carried by the first positioning assistance message, or a differential portion of the same type of information item relative to the first positioning assistance message. In some embodiments, the absolute reference point 141 transmits all the information items in the first positioning assistance message on the side of the absolute reference point 141, while the second positioning assistance messages transmitted by the another reference point 143 and the another reference point 142 do not include the information items that are the same as the information items in the first positioning assistance message, such as PRS resource pool, PRS bandwidth, or the like, thereby reducing resource consumption for the transmission of the positioning assistance message.

In summary, in the method according to the embodiments, the absolute positioning of the target terminal is achieved by receiving positioning assistance messages and positioning reference signals from different reference points.

The following are embodiments in which the absolute reference point transmits the third positioning assistance message, and the at least two other reference points need not transmit the positioning assistance messages.

FIG. 15 is a schematic diagram of a method for positioning an absolute location according to some embodiments of the present disclosure, which is illustrated by applying the method to a terminal.

The absolute reference point 141 transmits the third positioning assistance message to the target terminal 144, wherein the third positioning assistance message indicates a transmission mode in which the absolute reference point 141 transmits a first PRS, and transmission modes in which the another reference point 142 and the another reference point 143 transmit second PRSs.

In some embodiments, the third positioning assistance message further carries at least one of: an absolute location of the absolute reference point 141, absolute locations of the another reference point 142 and the another reference point 143, relative locations of the another reference point 142 and the another reference point 143 with respect to the absolute reference point 141, or timing offsets of the another reference point 142 and the another reference point 143 with respect to the absolute reference point 141.

In some embodiments, the absolute location of the absolute reference point 141 refers to a latitude and longitude location of the absolute reference point 141, the absolute location of the another reference point refers to a latitude and longitude location of the another reference point, the relative location of the another reference point with respect to the absolute reference point 141 refers to an offset value of the another reference point with respect to the absolute reference point 141, and the timing offset of the another reference point with respect to the absolute reference point 141 refers to a deviation value of the another reference point with respect to a reference time of the absolute reference point 141.

In summary, in the method according to the embodiments, the absolute reference point uniformly transmits the positioning assistance message, such that the transmission resource consumption for transmitting the positioning assistance message required for absolutely positioning the target terminal is reduced.

Type 2: The reference point passively transmits the PRS.

The following are embodiments in which the reference point transmits the positioning assistance message and the PRS upon the third PRS being transmitted by the target terminal.

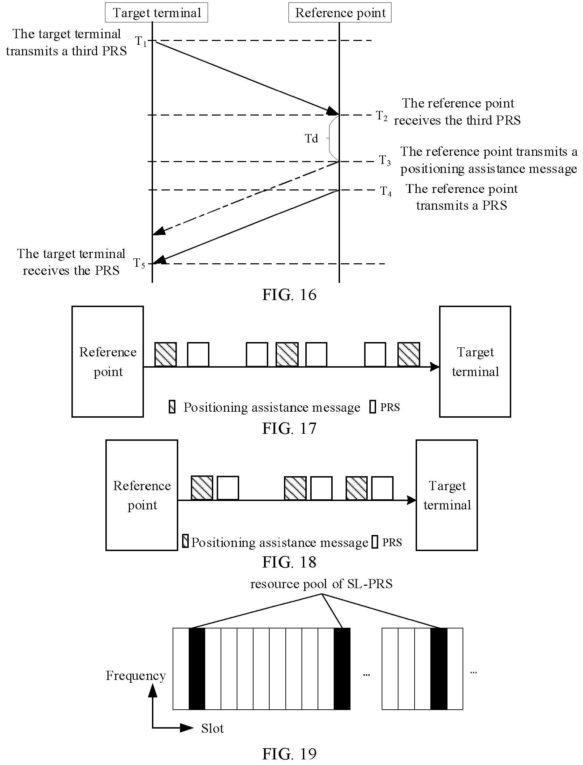

FIG. 16 is a flowchart of a method for positioning an absolute location according to some embodiments of the present disclosure, which is illustrated by applying the method to a terminal.

The target terminal transmits the third PRS at the moment of T1, the reference point receives the third PRS transmitted by the target terminal at the moment of T2, and upon a period of Td, the reference point transmits the positioning assistance message at the moment of T3, and transmits a first PRS or a second PRS at the moment of T4. The target terminal receives the first PRS or the second PRS at the moment of T5 based on the positioning assistance message. In some embodiments, T3 is the same as T4, or T3 and T4 belong to the same slot, or T3 is earlier than T4, or the slot of T3 is earlier than the slot of T4. Td represents a time difference between the time of the first PRS or the second PRS being transmitted by the reference point and the time of the third PRS from the target terminal being received, which is referred to as a PRS transceiving time difference.

By determining the PRS round trip time (RTT) of the target terminal relative to the different reference points, the target terminal determines its own absolute position based on the absolute geographic locations of the plurality of reference points and the RTT.

The following are embodiments in which the absolute reference point transmits the first positioning assistance message and the at least two other reference points transmit the second positioning assistance messages upon the target terminal transmitting the third PRS.

A method for positioning an absolute location is provided according to some embodiments of the present disclosure, which is illustrated by applying the method to a terminal.

Upon receiving the third PRS from the target terminal, the absolute reference point transmits the first positioning assistance message to the target terminal, wherein the first positioning assistance message indicates a transmission mode in which the absolute reference point transmits the first PRS. Upon receiving the third PRS from the target terminal, the another reference point transmits the second positioning assistance message to the target terminal, wherein the second positioning assistance message indicates a transmission mode in which the another reference point transmits the second PRS.

In some embodiments, the first positioning assistance message further carries an absolute location of the absolute reference point, the second positioning assistance message further carries at least one of: an absolute location of the another reference point, a relative location of the another reference point with respect to the absolute reference point, or a timing offset of the another reference point with respect to the absolute reference point.

In some embodiments, the absolute location of the absolute reference point refers to a latitude and longitude position of the absolute reference point, the absolute location of the another reference point refers to a latitude and longitude position of the another reference point, the relative location of the another reference point with respect to the absolute reference point refers to an offset value of the another reference point with respect to the absolute reference point, and the timing offset of the another reference point with respect to the absolute reference point refers to a deviation value of the another reference point relative to a reference time of the absolute reference point.

In some embodiments, the first positioning assistance message and the second positioning assistance message carry the same or separate information items, i.e., each of the first positioning assistance message and the second positioning assistance message independently carry a positioning assistance message of one reference point.

In some embodiments, the information item carried by the second positioning assistance message includes differential information of the second positioning assistance message relative to the first positioning assistance message. That is, the second positioning assistance message carries information that is different from the first positioning assistance message, information not carried by the first positioning assistance message, or a differential portion of the same type of information item relative to the first positioning assistance message. In some embodiments, the absolute reference point transmits all the information items in the first positioning assistance message on the side of the absolute reference point, while the second positioning assistance messages transmitted by the at least two other reference points do not transmit the information items that are the same as the information items in the first positioning assistance message, such as PRS resource pool, PRS bandwidth, etc., thereby reducing the resource loss during the transmission of the positioning assistance message.

In some embodiments, the sequence ID of the first PRS is not included in the first positioning assistance message, and/or the sequence ID of the second PRS is not included in the second positioning assistance message. In the case that the sequence ID of the first PRS is not included in the first positioning assistance message, the sequence ID of the first PRS is determined based on the sequence ID of the third PRS, i.e., the sequence ID of the first PRS is the same as the sequence ID of the third PRS, or the sequence ID of the first PRS is a function of the sequence ID of the third PRS. In the case that the sequence ID of the second PRS is not included in the second positioning assistance message, the sequence ID of the second PRS is determined based on the sequence ID of the third PRS, i.e., the sequence ID of the second PRS is the same as the sequence ID of the third PRS, or the sequence ID of the second PRS is a function of the sequence ID of the third PRS.

In summary, in the method according to the embodiments, the target terminal transmits the third PRS to trigger the reference point to transmit the positioning assistance message and the PRS, thereby reducing the transmission resource consumption for the positioning assistance message and the PRS in the process of the absolute positioning and improving the efficiency of the absolute positioning for the target terminal.

The following are embodiments in which the absolute reference point transmits a third positioning assistance message upon the target terminal transmitting the third PRS.

A method of positioning an absolute location is provided according to some embodiments of the present disclosure, which is illustrated by applying the method to a terminal.

Upon receiving the third PRS from the target terminal, the absolute reference point transmits the third positioning assistance message to the target terminal, wherein the third positioning assistance message indicates a transmission mode in which the absolute reference point transmits a first PRS and a transmission mode in which the another reference point transmits a second PRS.

In some embodiments, the third positioning assistance message further carries at least one of an absolute location of the absolute reference point, an absolute location of the another reference point, a relative location of the another reference point with respect to the absolute reference point, or a timing offset of the another reference point with respect to the absolute reference point.

In some embodiments, the absolute location of the absolute reference point refers to a latitude and longitude position of the absolute reference point, the absolute location of the another reference point refers to a latitude and longitude position of the another reference point, the relative location of the another reference point with respect to the absolute reference point refers to an offset value of the another reference point with respect to the absolute reference point, and the timing offset of the another reference point with respect to the absolute reference point refers to a deviation value of the another reference point relative to a reference time of the absolute reference point.

In some embodiments, the sequence ID of the first PRS, and/or the sequence ID of the second PRS is not included in the third positioning assistance message. In the case that the sequence ID of the first PRS is not included in the third positioning assistance message, the sequence ID of the first PRS is determined based on the sequence ID of the third PRS, i.e., the sequence ID of the first PRS is the same as the sequence ID of the third PRS or the sequence ID of the first PRS is a function of the sequence ID of the third PRS. In the case that the sequence ID of the second PRS is not included in the third positioning assistance message, the sequence ID of the second PRS is determined based on the sequence ID of the third PRS, i.e., the sequence ID of the second PRS is the same as the sequence ID of the third PRS, or the sequence ID of the second PRS is a function of the sequence ID of the third PRS.

In the present disclosure, the timing of transmitting the positioning assistance message is categorized into at least two types.

Type 1: Periodically transmitting the positioning assistance message.

Type 2: Transmitting the positioning assistance message in one-to-one correspondence prior to a transmission of the PRS indicated by the positioning assistance message.

Type 1: Periodically transmitting

FIG. 17 is a schematic diagram of a method for positioning an absolute location according to some embodiments of the present disclosure, which is illustrated by applying the method to a terminal.

The reference point periodically transmits the positioning assistance message to the target terminal. In some embodiments, the period value is predefined by a communication protocol, or configured or pre-configured by a configuration node. In some embodiments, the configuration node is a network device, an absolute reference point, or another terminal.

In some embodiments, the transmission period satisfies at least one of: a transmission period of the positioning assistance message is greater than a transmission period of the PRS; a transmission period of the positioning assistance message is greater than an integral multiple of a transmission period of the PRS; a transmission period of the positioning assistance message is equal to an integral multiple of a transmission period of the PRS; or a transmission period of the positioning assistance message is equal to a transmission period of the PRS; wherein the positioning assistance message is transmitted no later than the transmission of the PRS indicated by the positioning assistance message, i.e., the positioning assistance message is transmitted on a slot prior to the transmission slot of the PRS, or, the positioning assistance message is transmitted on the same slot as the PRS, but the transmission time domain of the positioning assistance message precedes the transmission time domain of the PRS.

In some embodiments, the transmission resource of the positioning assistance message is spaced apart by a first duration from the transmission resource of the PRS indicated by the positioning assistance message. In some embodiments, the first duration is predefined by a communication protocol, or configured or pre-configured by a configuration node. In some embodiments, the configuration node is a network device, an absolute reference point, or another terminal.

Type 2: Transmitting in one-to-one correspondence

FIG. 18 is a schematic diagram of a method for positioning an absolute location according to some embodiments of the present disclosure, which is illustrated by applying the method to a terminal.

The positioning assistance message is transmitted in one-to-one correspondence prior to the transmission of the PRS indicated by the positioning assistance message, i.e., the reference point transmits the positioning assistance message in one-to-one correspondence prior to transmitting the PRS, such that the case that the reception of the PRS by the target terminal is affected due to the terminal device not receiving the positioning assistance message is avoided.

The transmission resource of the positioning assistance message is spaced apart by a second duration from the transmission resource of the PRS. The second duration is predefined by a communication protocol, or configured or pre-configured by a configuration node. In some embodiments, the configuration node is a network device, an absolute reference point, or another terminal.

In the present disclosure, the selection methods for the transmission resource of the positioning assistance message are categorized into at least two types.

Type 1: Allocation by the configuration node (the base station, the absolute reference point, or the other terminal).

Type 2: Autonomous selection by the reference point.

In the present disclosure, the selection methods for the transmission resource of the PRS are categorized into at least three types.

Type 1: Allocation by the configuration node (the base station, the absolute reference point, or the other terminal).

Type 2: Autonomous selection by the reference point or the target terminal.

Type 3: Reserved by the positioning assistance message.

The selection method for the transmission resource of the first positioning assistance message includes: the absolute reference point transmitting the first positioning assistance message to the target terminal.

In the case that the absolute reference point is a network device, the transmission resource of the first positioning assistance message is autonomously selected by the absolute reference point within the resource pool.

In the case that the absolute reference point is a terminal, the transmission resource of the first positioning assistance message is autonomously selected by the absolute reference point within the resource pool, or, is allocated by the configuration node to the absolute reference point. In some embodiments, the configuration node is a network device or another terminal.

In the case that the absolute reference point autonomously selects the transmission resource of the first positioning assistance message within the resource pool, a bandwidth of the resource selected by the absolute reference point for transmitting the first positioning assistance message should be the same as a bandwidth for transmitting the first PRS, e.g., in the case that the bandwidth of the first PRS is the same as the bandwidth of the resource pool, the bandwidth of the resource selected by the absolute reference point for transmitting the first positioning assistance message should be the same as the bandwidth of the resource pool.

The selection method for the transmission resource of the second positioning assistance message includes: the another reference point transmitting the second positioning assistance message to the target terminal.

In the case that the another reference point is a network device, the transmission resource of the second positioning assistance message is autonomously selected by the another reference point within the resource pool.

In the case that the another reference point is a terminal, the transmission resource of the second positioning assistance message is autonomously selected by the another reference point within the resource pool, or, is allocated by a configuration node to the another reference point. In some embodiments, the configuration node is a network device, an absolute reference point, or another terminal.

The selection method for the transmission resource of the third positioning assistance message includes: the absolute reference point transmitting the third positioning assistance message to the target terminal.

In the case that the absolute reference point is a network device, the transmission resource of the third positioning assistance message is autonomously selected by the absolute reference point within the resource pool.

In the case that the absolute reference point is a terminal, the transmission resource of the third positioning assistance message is autonomously selected by the absolute reference point within the resource pool, or allocated by the configuration node to the absolute reference point. In some embodiments, the configuration node is a network device, a target terminal, or another terminal.

In the case that the transmission resource of the third positioning assistance message is autonomously selected by the absolute reference point within the resource pool, the bandwidth of the resource selected by the absolute reference point for transmitting the third positioning assistance message should be the same as the bandwidth for the transmission of the third PRS. In some embodiments, in the case that the bandwidth of the third PRS is the same as the bandwidth of the resource pool, the bandwidth of the resource selected by the absolute reference point for transmitting the third positioning assistance message should be the same as the bandwidth of the resource pool.

The selection method for the transmission resource of the PRS includes: the reference point transmitting the PRS to the target terminal.

In some embodiments, the transmission resource of the PRS is within one resource pool. In some embodiments, the resource pool is separately configured, and the separately configured resource pool overlaps or does not overlap in time or frequency domain with another sidelink communication resource pool. In some embodiments, the resource pool is one sidelink communication resource pool. As illustrated in FIG. 19, the resource pool of the PRS does not occupy the same slot as the other sidelink communication resource pool.

In some embodiments, the absolute reference point transmits the first PRS to the target terminal.

In the case that the absolute reference point is a network device, the transmission resource of the first PRS is autonomously selected by the absolute reference point within the resource pool supporting the first mode. In the case that the absolute reference point is a terminal, the transmission resource of the first PRS is autonomously selected by the absolute reference point within the resource pool supporting the second mode, or allocated by a configuration node to the absolute reference point. In some embodiments, the configuration node is a network device or another terminal.

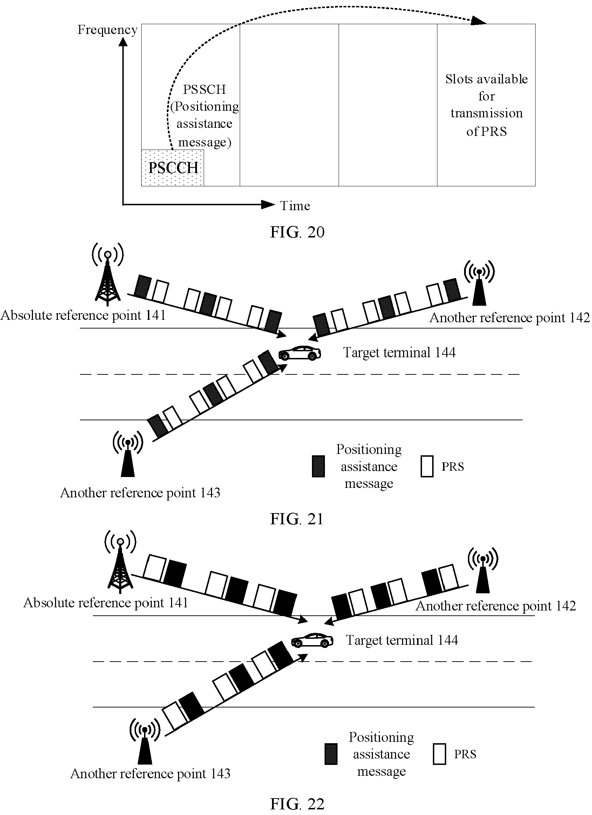

In some embodiments, as illustrated in FIG. 20, the transmission resource of the PRS is a reserved resource indicated by the positioning assistance message. The positioning assistance message transmitted by the reference point is carried on the PSSCH, and the transmission of the PSSCH is indicated by the PSCCH, wherein the PSCCH further indicates to reserve one or more slots for the transmission of the PRS. In some embodiments, in the case that the reference point transmits the PRS, the transmission resource of the PRS is located within the one or more slots reserved by the PSCCH.

In some embodiments, the another reference point transmits the second PRS to the target terminal.

In the case that the another reference point is a network device, the transmission resource of the second PRS is autonomously selected by the another reference point with a resource pool supporting the first mode. In the case that the another reference point is a terminal, the transmission resource of the second PRS is autonomously selected by the another reference point within the resource pool supporting the second mode, or allocated by a configuration node to the another reference point. In some embodiments, the configuration node is a network device, an absolute reference point, or another terminal. In some embodiments, the absolute reference point acquires the transmission modes of the PRSs of a plurality of reference points from the configuration node and transmits the transmission modes of the PRSs to the corresponding reference points over the positioning assistance message, and the at least two other reference points determine the transmission mode of the PRS based on the positioning assistance message from the absolute reference point.

In some embodiments, the transmission resource of the second PRS is a reserved resource indicated by the second positioning assistance message or the third positioning assistance message. The positioning assistance message transmitted by the reference point is carried on the PSSCH, and the transmission of the PSSCH is directed by the PSCCH, wherein the PSCCH further indicates to reserve one or more slots for the transmission of the second PRS. In some embodiments, in the case that the second PRS is transmitted by the another reference point, the transmission resource of the PRS is located within the one or more slots reserved by the PSCCH.

In some embodiments, the target terminal transmits the third PRS to the reference point.

In some embodiments, the transmission resource of the third PRS is autonomously selected by the target terminal with in a resource pool supporting the second mode. In some embodiments, the transmission resource of the third PRS is allocated by a configuration node. In some embodiments, the configuration node is a network device, an absolute reference point, another reference point, or another terminal.

In some embodiments, a corresponding relationship is present between the transmission resources of the third PRS by the target terminal and the transmission resources of the positioning assistance message by the reference point. In some embodiments, the resource pool of the target terminal for transmitting the third PRS is the same as the resource pool of the reference point for transmitting the positioning assistance message. In some embodiments, an mth resource configured for the target terminal to transmit the positioning reference signal in slot n within a resource pool corresponds to (m*K)th, (m*K+1)th, ..., (m*K+K-1)th resources configured for the reference node to transmit the positioning assistance message (m*K)th, (m*K+1)th, ..., (m*K+K-1)th resources based on the ID of the reference point to transmit the positioning assistance message.

In some embodiments, the transmission resource pool of the positioning assistance message is the same as the transmission resource pool of the PRS, and an mth positioning assistance message transmission resource in slot n of the resource pool corresponds to the mth PRS transmission resource in slot n+x within the resource pool, wherein x is a specific value. Alternatively, the transmission resource pool of the positioning assistance message is different from the transmission resource pool of the PRS, and an mth positioning assistance message transmission resource in slot n within the transmission resource pool of the positioning assistance message corresponds to an mth PRS transmission resource on slot N within the resource pool of the PRS, wherein the slot N is spaced apart by a second duration from the slot n. At least one of n, x, or N is predefined by a communication protocol or configured or pre-configured by the configuration node. In the case that the resource pool to which the transmission resource of the positioning assistance message belongs is the same as the resource pool of the transmission resource of the PRS, the positioning assistance message may not include indication information of the transmission resource pool of the PRS.

In some embodiments, the resource pool to which the transmission resource of the positioning assistance message belongs overlaps with the resource pool to which the transmission resource of the PRS belongs.

In some embodiments, the resource pool to which the transmission resource of the positioning assistance message belongs is different from the resource pool to which the transmission resource of the PRS belongs.

It should be understood that the positioning system, the transmission mode of the positioning assistance message, the transmission timing of the positioning assistance message, and the selection method of the transmission resource of the positioning assistance message for the method for positioning the absolute location described above can be freely combined.

A method for positioning an absolute location is provided according to some embodiments of the present disclosure, which is illustrated by applying the method to a target terminal.

In the embodiments, one absolute reference point 141 and two other reference points are present, wherein the two other reference points include another reference point 142 and another reference point 143.

The absolute reference point 141 transmits a first positioning assistance message to the target terminal 144, wherein the first positioning assistance message indicates a transmission mode in which the absolute reference point 141 transmits a first PRS. The another reference point 142 and the another reference point 143 transmit second positioning assistance messages to the target terminal 144, wherein the second positioning assistance messages indicate transmission modes in which the at least two other reference points transmit second PRSs.

In some embodiments, the first positioning assistance message further carries an absolute location of the absolute reference point 141, and the second positioning assistance message further carries at least one of: the absolute location of the another reference point, a relative location of the another reference point with respect to the absolute reference point 141, or a timing offset of the another reference point with respect to the absolute reference point 141.

In some embodiments, the absolute location of the absolute reference point 141 refers to a latitude and longitude location of the absolute reference point 141, the absolute location of the another reference point refers to a latitude and longitude location of the another reference point, the relative location of the another reference point with respect to the absolute reference point 141 refers to an offset value of the another reference point with respect to the absolute reference point 141, and the timing offset of the another reference point with respect to the absolute reference point 141 refers to a deviation value of the another reference point with respect to a reference time of the absolute reference point 141.

In some embodiments, the first positioning assistance message and the second positioning assistance message carry the same or separate information items, i.e., each of the first positioning assistance message and the second positioning assistance message independently carries a positioning assistance message of one reference point.

In some embodiments, the information item carried by the second positioning assistance message includes differential information of the second positioning assistance message relative to the first positioning assistance message. That is, the second positioning assistance message carries information that is different from the first positioning assistance message, information not carried by the first positioning assistance message, or a differential portion of the same type of information item relative to the first positioning assistance message. In some embodiments, the absolute reference point 141 transmits all the information items in the first positioning assistance message on the side of the absolute reference point 141, while the second positioning assistance messages transmitted by the at least two other reference points do not include the information items that are the same as the information items in the first positioning assistance message, such as PRS resource pool, PRS bandwidth, etc., thereby reducing the resource consumption for the transmission of the positioning assistance message.

The target terminal 144 receives a first PRS based on the first positioning assistance message from the absolute reference point 141, and receives second PRSs based on the second positioning assistance messages from the another reference point 142 and the another reference point 143. In some embodiments, the absolute positioned location of the target terminal 144 is calculated based on the first PRS and the second PRS.

As illustrated in FIG. 21, in some embodiments, the first positioning assistance message and the second positioning assistance message are transmitted periodically. In some embodiments, the period value is predefined by a communication protocol, or configured or pre-configured by a configuration node. In some embodiments, the configuration node is a network device, the absolute reference point 141, or another terminal.

In some embodiments, a transmission period of the positioning assistance message is greater than a transmission period of the PRS; or the transmission period of the positioning assistance message is greater than an integral multiple of the transmission period of the PRS; or the transmission period of the positioning assistance message is equal to an integral multiple of the transmission period of the PRS; or the transmission period of the positioning assistance message is equal to the transmission period of the PRS, wherein the positioning assistance message is transmitted no later than the transmission of the PRS indicated by the positioning assistance message. That is, the positioning assistance message is transmitted on a slot prior to a slot in which the PRS is transmitted, or the positioning assistance message is transmitted on the same slot as the PRS, but the time domain point at which the positioning assistance message is transmitted precedes the time domain point at which the PRS is transmitted.

In some embodiments, the transmission resource of the positioning assistance message is spaced apart by a first duration from the transmission resource of the PRS indicated by the positioning assistance message. In some embodiments, the first duration is predefined by a communication protocol, or configured or pre-configured by the configuration node. In some embodiments, the configuration node is a network device, the absolute reference point 141, or another terminal.

As illustrated in FIG. 22, the positioning assistance message is transmitted in one-to-one correspondence prior to a transmission of the PRS indicated by the positioning assistance message. That is, the absolute reference point 141 transmits the first positioning assistance message in one-to-one correspondence prior to the transmission of the first PRS, and the another reference point 142 and the another reference point 143 transmit the second positioning assistance messages in one-to-one correspondence prior to the transmissions of the second PRSs, thereby avoiding affecting the reception of the PRS due to the target terminal 144 not receiving the positioning assistance message. The transmission resource of the first positioning assistance message is spaced apart by a second duration from the transmission resource of the first PRS, and between the transmission resource of the second positioning assistance message and the transmission resource of the second PRS. The second duration is predefined by a communication protocol, or configured or pre-configured by a configuration node. In some embodiments, the configuration node is a network device, the absolute reference point 141, or another terminal.

In some embodiments, the transmission resource pool of the positioning assistance message is the same as the transmission resource pool of the PRS, wherein the mth positioning assistance message transmission resource in slot n of the resource pool corresponds to the mth PRS transmission resource in slot n+x within the resource pool, x being a specific value. Alternatively, the transmission resource pool of the positioning assistance message is different from the transmission resource pool of the PRS, wherein the mth positioning assistance message transmission resource in slot n within the transmission resource pool of the positioning assistance message corresponds to the mth PRS transmission resource on slot N within the resource pool of the PRS, and the slot N is spaced apart by a second duration from the slot n. At least one of n, x, and N is predefined by a communication protocol, or configured or pre-configured by the configuration node.

In some embodiments, the transmission resource of the PRS indicated by the positioning assistance message is a reserved resource indicated by the positioning assistance message. The positioning assistance message transmitted by the reference point is carried on the PSSCH, and the transmission of the PSSCH is indicated by the PSCCH, wherein the PSCCH further indicates to reserve one or more slots for the transmission of the PRS. In some embodiments, in the case that the reference point transmits the PRS, the transmission resource of the PRS is located within the one or more slots reserved by the PSCCH.

In some embodiments, the transmission resources of the PRSs are located within one resource pool. In some embodiments, the resource pool is separately configured, and the separately configured resource pool overlaps or does not overlap in the time or frequency domain with another sidelink communication resource pool. In some embodiments, the resource pool is one sidelink communication resource pool.

In some embodiments, the resource pool of the PRS is configured for resource selection under the first mode, where the reference point acquires the transmission resource of the PRS within the resource pool by receiving scheduling information from a configuration node; or the reference point autonomously selects, within the resource pool of the PRS, the transmission resource available for the transmission of the PRS. In some embodiments, the configuration node is a network device, the absolute reference point 141, or another terminal. In some embodiments, in the case that the reference point is a first terminal, the configuration node is a network device, the absolute reference point 141, or a second terminal.

In some embodiments, the transmission resource of the positioning assistance message is allocated by a configuration node, and the reference point receives the transmission resource of the positioning assistance message allocated by the configuration node, or the reference point autonomously selects the transmission resource of the positioning assistance message. In some embodiments, the configuration node is a network device, the absolute reference point 141, or another terminal. In some embodiments, in the case that the reference point is a first terminal, the configuration node is a network device, the absolute reference point 141, or a second terminal.

In some embodiments, the reference point receives the transmission resources allocated by the configuration node for the positioning assistance message and/or the PRS. In the case that the configuration node is a network device and the reference point is a terminal, the reference point determines the transmission resources of the positioning assistance message and/or the PRS based on downlink control information (DCI) from the network device and/or RRC signaling from the network device.

In some embodiments, the resource pool to which the transmission resource of the positioning assistance message belongs is the same as, overlapped with, or different from the resource pool to which the transmission resource of the PRS belongs. In some embodiments, the transmission resource of the SL-PRS is configured for transmitting the PSCCH and/or the PSSCH. In some embodiments, the positioning assistance message is carried in a second-stage SCI of the PSCCH or the PSSCH. In some embodiments, in the case that the resource pool to which the transmission resource of the positioning assistance message belongs is the same as the resource pool to which the transmission resource of the PRS belongs, the positioning assistance message does not include indication information of the transmission resource pool of the PRS.

A method for positioning an absolute location is provided according to some embodiments of the present disclosure, which is illustrated by applying the method to a target terminal.

In the embodiments, one absolute reference point 141 and two other reference points are present, and the two other reference points include another reference point 142 and another reference point 143.

The absolute reference point 141 transmits a third positioning assistance message to the target terminal 144, wherein the third positioning assistance message indicates a transmission mode in which the absolute reference point 141 transmits a first PRS, and transmission modes in which the another reference point 142 and the another reference point 143 transmit second PRSs.

In some embodiments, the third positioning assistance message further carries at least one of: an absolute location of the absolute reference point 141, absolute locations of the at least two other reference points, relative locations of the at least two other reference points relative to the absolute reference point 141, or timing offsets of the at least two other reference points relative to the absolute reference point 141.

In some embodiments, the absolute location of the absolute reference point 141 refers to a latitude and longitude location of the absolute reference point 141, the absolute location of the another reference point refers to a latitude and longitude location of the another reference point, the relative location of the another reference point with respect to the absolute reference point 141 refers to an offset value of the another reference point with respect to the absolute reference point 141, and the timing offset of the another reference point with respect to the absolute reference point 141 refers to a deviation value of the another reference point with respect to a reference time of the absolute reference point 141.

The target terminal receives the first PRS and the second PRS based on the third positioning assistance message from the absolute reference point 141. In some embodiments, the absolute positioned location of the target terminal is calculated based on the first PRS and the second PRS.

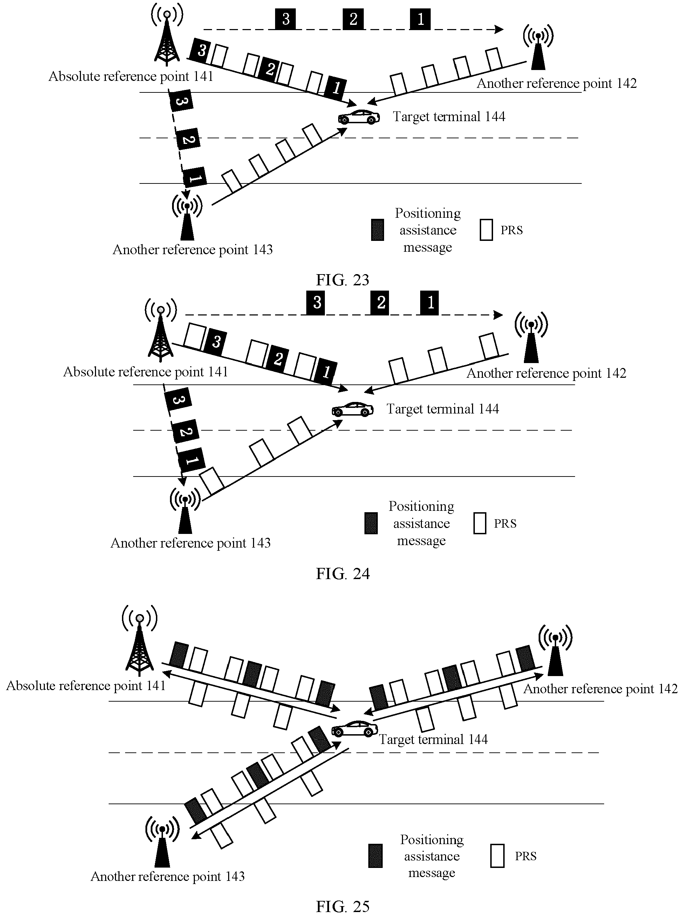

As illustrated in FIG. 23, in some embodiments, the third positioning assistance message is transmitted periodically. In some embodiments, the period value is predefined by a communication protocol, or configured or pre-configured by a configuration node. In some embodiments, the configuration node is a network device, the absolute reference point 141, or another terminal.

It is noted that the three positioning assistance messages labeled as 1 in FIG. 23 are the same positioning assistance message, the three positioning assistance messages labeled as 2 in FIG. 23 are the same positioning assistance message, and the three positioning assistance messages labeled as 3 in FIG. 23 are the same positioning assistance message. The figure in which one same message is drawn separately to be more is for the purpose of graphically illustrating the process of the target terminal, the another reference point 142, and the another reference point 143 receiving the same positioning assistance message.

In some embodiments, the another reference point 142 and the another reference point 143 receive the third positioning assistance message from the absolute reference point 141, and the another reference point 142 and the another reference point 143 transmit second PRSs to the target terminal 144 based on the third positioning assistance message.

In some embodiments, a transmission period of the third positioning assistance message is greater than a transmission period of the first PRS or the second PRS; or a transmission period of the third positioning assistance message is greater than an integral multiple of a transmission period of the first PRS or the second PRS; or a transmission period of the third positioning assistance message is equal to an integral multiple of a transmission period of the first PRS or the second PRS; or a transmission period of the third positioning assistance message is equal to a transmission period of the first PRS or the second PRS, wherein the third positioning assistance message is transmitted no later than the transmissions of the first PRS and the second PRS indicated by the third positioning assistance message. That is, the third positioning assistance message is transmitted on a slot prior to a slot in which the first PRS or the second PRS is transmitted, or the third positioning assistance message and the first PRS/the second PRS are transmitted on the same slot, but the transmission time domain of the third positioning assistance message precedes the transmission time domains of the first PRS and the second PRS.

In some embodiments, the transmission resource of the third positioning assistance message is spaced apart by a first duration from the transmission resource of the PRS indicated by the third positioning assistance message. In some embodiments, the first duration is predefined by a communication protocol, or configured or pre-configured by a configuration node. In some embodiments, the configuration node is a network device, the absolute reference point 141, or another terminal.

As illustrated in FIG. 24, in some embodiments, the third positioning assistance message is transmitted in one-to-one correspondence prior to the transmission of the first PRS or the second PRS indicated by the third positioning assistance message, i.e., prior to the absolute reference point 141 transmitting the first PRS and the at least two other reference points transmitting the second PRSs, the absolute reference point 141 transmits the third positioning assistance message in one-to-one correspondence. The transmission resource of the third positioning assistance message is spaced apart by a second duration from the transmission resource of the first PRS, and between the transmission resource of the third positioning assistance message and the transmission resource of the second PRS. In some embodiments, the second duration is predefined by a communication protocol, or configured or pre-configured by a configuration node. In some embodiments, the configuration node is a network device, the absolute reference point 141, or another terminal.

It is noted that the three positioning assistance messages labeled as 1 in FIG. 24 are the same positioning assistance message, the three positioning assistance messages labeled as 2 in FIG. 24 are the same positioning assistance message, and the three positioning assistance messages labeled as 3 in FIG. 24 are the same positioning assistance message. The figure in which one same message is drawn separately to be more is for the purpose of graphically illustrating the process of the target terminal, the another reference point 142, and the another reference point 143 receiving the same positioning assistance message.

In some embodiments, the another reference point 142 and the another reference point 143 receive the third positioning assistance message from the absolute reference point 141, and the another reference point 142 and the another reference point 143 transmit a second PRS to the target terminal 144 based on the third positioning assistance message.

In some embodiments, the transmission resource of the PRS indicated by the third positioning assistance message is a reserved resource indicated by the third positioning assistance message. The third positioning assistance message transmitted by the absolute reference point 141 is carried on the PSSCH, and the transmission of the PSSCH is indicated by the PSCCH, wherein the PSCCH further indicates to reserve one or more slots for the transmission of the PRS. In some embodiments, in the case that the reference point transmits the PRS, the transmission resource of the PRS is located within the one or more slots reserved by the PSCCH.

In some embodiments, the transmission resources of the PRS are located within one resource pool. In some embodiments, the resource pool is separately configured, and the separately configured resource pool overlaps or does not overlap in the time or frequency domain with another sidelink communication resource pool. In some embodiments, the resource pool is one sidelink communication resource pool.

In some embodiments, the resource pool of the PRS is configured for resource selection under the first mode, wherein the reference point acquires the transmission resource of the PRS within the resource pool by receiving scheduling information from a configuration node; or the reference point autonomously selects the transmission resource available for transmission of the PRS within the resource pool of the PRS. In some embodiments, the configuration node is a network device, the absolute reference point 141, or another terminal. In some embodiments, in the case that the reference point is a first terminal, the configuration node is a network device, the absolute reference point 141, or a second terminal.

In some embodiments, the transmission resource of the positioning assistance message is allocated by a configuration node, and the reference point receives the transmission resource of the positioning assistance message allocated by the configuration node, or the reference point autonomously selects the transmission resource of the positioning assistance message. In some embodiments, the configuration node is a network device, the absolute reference point 141, or another terminal.

In some embodiments, in the case that the absolute reference point 141 is a terminal, the configuration node is a network device, the absolute reference point 141, or a second terminal. In some embodiments, the at least two other reference points determine the transmission modes of the PRSs based on the allocation of the configuration node; or the absolute reference point 141 acquires the transmission modes of the PRSs of a plurality of reference points from the configuration node and transmits each of the transmission modes of the PRSs to a reference point corresponding to the PRS over the positioning assistance message, and the at least two other reference points determine the transmission modes of the PRSs based on the positioning assistance message from the absolute reference point 141.

In some embodiments, the absolute reference point 141 autonomously selects a transmission resource of the positioning assistance message within the resource pool, in which case a bandwidth of the resource selected by the absolute reference point 141 for transmitting the positioning assistance message should be the same as a bandwidth of the resource of transmitting the PRS. For example, in the case that the bandwidth of the PRS is the same as the bandwidth of the resource pool, then the bandwidth of the resource selected by the absolute reference point 141 for transmitting the positioning assistance message should be the same as the bandwidth of the resource pool.

In some embodiments, the resource pool to which the transmission resource of the positioning assistance message belongs is the same as, overlapped with, or different from the resource pool to which the transmission resource of the PRS belongs. In some embodiments, the transmission resource of the SL-PRS is configured for transmitting the PSCCH and/or the PSSCH. In some embodiments, the positioning assistance message is carried in a second-stage SCI of the PSCCH or the PSSCH. In the case that the resource pool to which the transmission resource of the positioning assistance message belongs is the same as the resource pool to which the transmission resource of the PRS belongs, the positioning assistance message does not include the indication information of the transmission resource pool of the PRS.

A method for positioning an absolute location is provided according to some embodiments of the present disclosure, which is illustrated by applying the method to a target terminal 144.

In the embodiments, one absolute reference point 141 and two other reference points are present, and two other reference points include another reference point 142 and another reference point 143.

The target terminal 144 transmits a third SL-PRS at the moment of T1, the reference point receives the third SL-PRS from the target terminal 144 at the moment of T2, and upon a period of Td, the reference point transmits a positioning assistance message at the moment of T3 and transmits a SL-PRS at the moment of T4, and the target terminal 144 receives the SL-PRS based on the positioning assistance message at the moment of T5. In some embodiments, T3 is the same as T4, or T3 and T4 belong to the same slot, or T3 is smaller than T4, or the slot of T3 is earlier than the slot of T4. Td represents a time difference between the time point at which the reference point transmits the SL-PRS and the time point at which the third SL-PRS from the target terminal 144 is received, which is referred to as an SL-PRS transceiving time difference.

By determining the SL-PRS round trip time (RTT) of the target terminal 144 relative to the different reference points, the target terminal 144 determines its own absolute positioned location based on the absolute geographic locations of the plurality of reference points and the RTT.

As illustrated in FIG. 25, in some embodiments, all the absolute reference point 141 and the at least two other reference points receive the third PRS from the target terminal 144. The absolute reference point 141 transmits a first positioning assistance message to the target terminal 144, and the at least two other reference points transmit second positioning assistance messages to the target terminal 144. The first positioning assistance message indicates a transmission mode in which the absolute reference point 141 transmits a first PRS, and the second positioning assistance messages indicate transmission modes in which the at least two other reference points transmit second PRSs.

In some embodiments, the first positioning assistance message further carries an absolute location of the absolute reference point 141, and the second positioning assistance message further carries at least one of: an absolute location of the another reference point, a relative location of the another reference point with respect to the absolute reference point 141, or a timing offset of the another reference point with respect to the absolute reference point 141.

The absolute location of the absolute reference point 141 refers to a latitude and longitude location of the absolute reference point 141, the absolute location of the another reference point refers to a latitude and longitude location of the another reference point, the relative location of the another reference point with respect to the absolute reference point 141 refers to an offset value of the another reference point with respect to the absolute reference point 141, and the timing offset of the another reference point with respect to the absolute reference point 141 refers to a deviation value of the another reference point with respect to a reference time of the absolute reference point 141.

In some embodiments, the first positioning assistance message and the second positioning assistance message carry the same or separate information items, i.e., each of the first positioning assistance message and the second positioning assistance message independently carries a positioning assistance message of one reference point.

In some embodiments, the information item carried by the second positioning assistance message includes differential information of the second positioning assistance message relative to the first positioning assistance message. That is, the second positioning assistance message carries information that is different from the first positioning assistance message, information not carried by the first positioning assistance message, or a differential portion of the same type of information item relative to the first positioning assistance message. In some embodiments, the absolute reference point 141 transmits all the information items in the first positioning assistance message on the side of the absolute reference point 141, while the second positioning assistance messages transmitted by the at least two other reference points do not include the information items that are the same as the information items in the first positioning assistance message, such as PRS resource pool, PRS bandwidth, etc., thereby reducing the resource consumption for the transmission of the positioning assistance message.

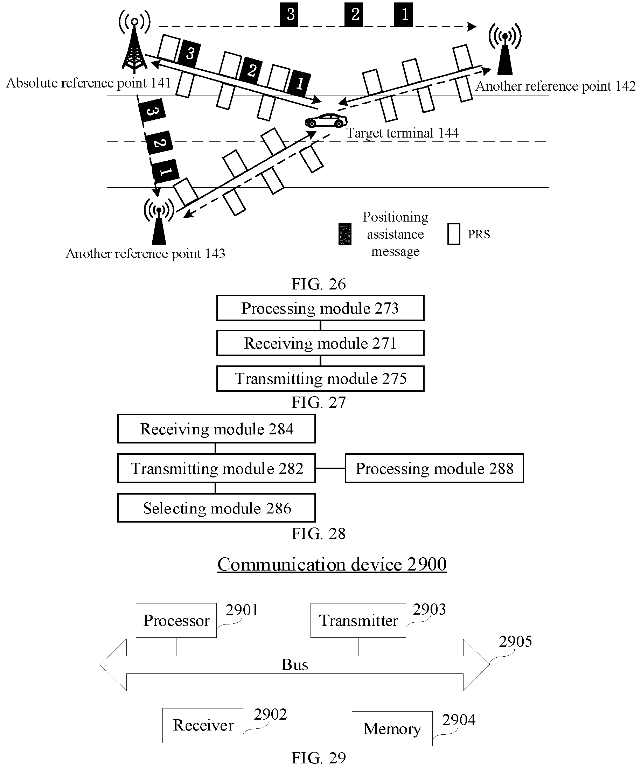

As illustrated in FIG. 26, in some embodiments, only the absolute reference point 141 receives the third PRS from the target terminal 144, or all the absolute reference point 141 and the at least two other reference points receive the third PRS from the target terminal 144. The absolute reference point 141 transmits the third positioning assistance message to the target terminal 144, wherein the third positioning assistance message indicates a transmission mode in which the absolute reference point 141 transmits a first PRS, and transmission modes in which the at least two other reference points transmit second PRSs.

In some embodiments, the third positioning assistance message further carries at least one of: an absolute location of the absolute reference point 141, an absolute location of the another reference point, a relative location of the another reference point with respect to the absolute reference point 141, or a timing offset of the another reference point with respect to the absolute reference point 141.

The absolute location of the absolute reference point 141 refers to a latitude and longitude location of the absolute reference point 141, the absolute location of the another reference point refers to a latitude and longitude location of the another reference point, the relative location of the another reference point with respect to the absolute reference point 141 refers to an offset value of the another reference point with respect to the absolute reference point 141, and the timing offset of the another reference point with respect to the absolute reference point 141 refers to a deviation value of the another reference point with respect to a reference time of the absolute reference point 141.

In some embodiments, the sequence ID of the first PRS, and/or the sequence ID of the second PRS is not included in the third positioning assistance message. In the case that the sequence ID of the first PRS is not included in the third positioning assistance message, the sequence ID of the first PRS is determined based on the sequence ID of the third PRS, i.e., the sequence ID of the first PRS is the same as the sequence ID of the third PRS, or the sequence ID of the first PRS is a function of the sequence ID of the third PRS. In the case that the sequence ID of the second PRS is not included in the third positioning assistance message, the sequence ID of the second PRS is determined based on the sequence ID of the third PRS, i.e., the sequence ID of the second PRS is the same as the sequence ID of the third PRS, or the sequence ID of the second PRS is a function of the sequence ID of the third PRS.

In some embodiments, the transmission resource of the PRS indicated by the positioning assistance message is a reserved resource indicated by the positioning assistance message. The positioning assistance message transmitted by the reference point is carried on the PSSCH, and the transmission of PSSCH is indicated by the PSCCH, wherein the PSCCH further indicates to reserve one or more slots for the transmission of the PRS. In some embodiments, in the case that the reference point transmits the PRS, the transmission resource of the PRS is located within the one or more slots reserved by the PSCCH.

In some embodiments, the transmission resources of the PRS are located within one resource pool. In some embodiments, the resource pool is separately configured, and the separately configured resource pool overlaps or does not overlap in the time or frequency domain with another sidelink communication resource pool. In some embodiments, the resource pool is one sidelink communication resource pool.

In some embodiments, the resource pool of the PRS is configured for resource selection under the first mode, wherein the reference point acquires the transmission resource of the PRS within the resource pool by receiving scheduling information from a configuration node; or the reference point autonomously selects the transmission resource available for transmission of the PRS within the resource pool of the PRS. In some embodiments, the configuration node is a network device, the absolute reference point 141, or another terminal. In some embodiments, in the case that the reference point is a first terminal, the configuration node is a network device, the absolute reference point 141, or a second terminal.

In some embodiments, the transmission resource of the positioning assistance message is allocated by a configuration node, and the reference point receives the transmission resource of the positioning assistance message allocated by the configuration node, or the reference point autonomously selects the transmission resource of the positioning assistance message. In some embodiments, the configuration node is a network device, the absolute reference point 141, or another terminal. In some embodiments, in the case that the reference point is a first terminal, the configuration node is a network device, the absolute reference point 141, or a second terminal.

In some embodiments, the resource pool to which the transmission resource of the positioning assistance message belongs is the same as, overlapped with, or different from the resource pool to which the transmission resource of the PRS belongs. In some embodiments, the transmission resource of the SL-PRS is configured for transmitting the PSCCH and/or the PSSCH. In some embodiments, the positioning assistance message is carried in a second-stage SCI of the PSCCH or the PSSCH.

In some embodiments, the transmission resource of transmitting the third PRS by the target terminal 144 is allocated by a configuration node or autonomously selected by the target terminal 144.

In some embodiments, a corresponding relationship is present between the transmission resources of the third PRS by the target terminal and the transmission resources of the positioning assistance message by the reference point. In some embodiments, the resource pool of the target terminal 144 for transmitting the third PRS is the same as the resource pool of the reference point for transmitting the positioning assistance message. In some embodiments, an mth resource in slot n within a resource pool configured for the target terminal to transmit the positioning reference signal corresponds to (m*K)th, (m*K+1)th, ..., (m*K+K-1)th resources in slot n+y configured for the reference node to transmit the positioning assistance message, wherein both K and y are specific values that are predefined by a communication protocol or configured or pre-configured by the configuration node, and the reference point selects one of the (m*K)th, (m*K+1)th, ..., (m*K+K-1)th resources based on the ID of the reference point to transmit the positioning assistance message.

It is noted that the three positioning assistance messages labeled as 1 in FIG. 26 are the same positioning assistance message, the three positioning assistance messages labeled as 2 in FIG. 26 are the same positioning assistance message, and the three positioning assistance messages labeled as 3 in FIG. 26 are the same positioning assistance message. The figure in which one same message is drawn separately to be more is for the purpose of graphically illustrating the process of the target terminal, the another reference point 142, and the another reference point 143 receiving the same positioning assistance message.

FIG. 27 is a structural block diagram of an apparatus for positioning an absolute location according to some embodiments of the present disclosure. The device includes at least some of the following modules: a receiving module 271, configured to receive a positioning assistance message, wherein the positioning assistance message indicates a transmission mode of a PRS; and receive the PRS based on the positioning assistance message; and a processing module 273, configured to calculate an absolute positioned location of the apparatus based on the PRS.

In some embodiments, the PRS and the positioning assistance message are proactively transmitted by reference points, wherein the reference points include one absolute reference point and at least two other reference points.

In some embodiments, the positioning assistance message includes: a first positioning assistance message transmitted by the absolute reference point and second positioning assistance messages transmitted by the at least two other reference points; wherein the first positioning assistance message indicates a transmission mode of a first PRS transmitted by the absolute reference point, and the second positioning assistance messages indicate transmission modes of second PRSs transmitted by the at least two other reference points.

In some embodiments, the first positioning assistance message further carries an absolute location of the absolute reference point; and each of the second positioning assistance messages further carries at least one of: an absolute location of one of the at least two other reference points, a relative location of one of the at least two other reference points with respect to the absolute reference point, or a timing offset of one of the at least two other reference points with respect to the absolute reference point.

In some embodiments, the receiving module 271 is configured to receive the first PRS based on the first positioning assistance message; and receive the second PRSs based on the second positioning assistance messages.

In some embodiments, each of the second positioning assistance messages carries differential information of the second positioning assistance message relative to the first positioning assistance message.

In some embodiments, the positioning assistance message includes: a third positioning assistance message transmitted by the absolute reference point, wherein the third positioning assistance message indicates a transmission mode of a first PRS transmitted by the absolute reference point and transmission modes of second PRSs transmitted by the at least two other reference points.

In some embodiments, the third positioning assistance message further carries at least one of: an absolute location of the absolute reference point, absolute locations of the at least two other reference points, relative locations of the at least two other reference points with respect to the absolute reference point, or timing offsets of the at least two other reference points with respect to the absolute reference point.

In some embodiments, the receiving module 271 is configured to receive the first PRS and the second PRSs based on the third positioning assistance message.

In some embodiments, the transmission mode includes at least one of: a resource pool of the PRS; a transmission period of the PRS; a time domain location of a resource configured for a first transmission of the PRS during each transmission period; the number of transmissions of the PRS during each transmission period; a time interval between two adjacent transmissions of the PRS; a comb interval of the PRS; a frequency domain location of the PRS; a bandwidth of the PRS; or a sequence ID of the PRS.

In some embodiments, the positioning assistance message is transmitted periodically.

In some embodiments, a transmission period of the positioning assistance message is greater than a transmission period of the PRS; or a transmission period of the positioning assistance message is greater than an integral multiple of a transmission period of the PRS; or a transmission period of the positioning assistance message is equal to an integral multiple of a transmission period of the PRS; or a transmission period of the positioning assistance message is equal to a transmission period of the PRS; wherein the positioning assistance message is transmitted no later than the transmission of the PRS indicated by the positioning assistance message.

In some embodiments, a sidelink resource of the positioning assistance message is spaced apart by a first duration from a transmission resource of the PRS indicated by the positioning assistance message, wherein the first duration is predefined by a communication protocol, or configured or pre-configured by a network device.

The positioning assistance message is transmitted in one-to-one correspondence prior to a transmission of the PRS indicated by the positioning assistance message.

A sidelink resource of the positioning assistance message is spaced apart by a second duration from a transmission resource of the PRS indicated by the positioning assistance message, wherein the second duration is predefined by a communication protocol, or configured or pre-configured by a network device.

In some embodiments, the transmission resource of the PRS indicated by the positioning assistance message is a reserved resource indicated by the positioning assistance message.

In some embodiments, the apparatus further includes: a transmitting module 275, configured to transmit a third PRS, wherein the positioning assistance message and the PRS are transmitted in response to a trigger of the third PRS, and the positioning assistance message and the PRS are transmitted simultaneously.

In some embodiments, the apparatus further includes: a processing module 273, configured to determine a sequence ID of the PRS based on a sequence ID of the third PRS in the case that the positioning assistance message does not include the sequence ID of the PRS.

In some embodiments, the sequence ID of the PRS is the same as the sequence ID of the third PRS; or the sequence ID of the PRS is a function of the sequence ID of the third PRS.

In some embodiments, the absolute reference point is a reference synchronization source for the at least two other reference points.

In some embodiments, the positioning assistance message is RRC signaling, MAC signaling, or physical layer signaling.

In some embodiments, the positioning assistance message is transmitted in a unicast, multicast, or broadcast mode.

FIG. 28 is a structural block diagram of an apparatus for positioning an absolute location according to some embodiments of the present disclosure. The apparatus includes at least some of the following modules: a transmitting module 282, configured to transmit a positioning assistance message and a PRS to a target terminal, wherein the positioning assistance message indicates a transmission mode of the PRS, and the PRS is configured to position an absolute location of the target terminal.

In some embodiments, the reference point is an absolute reference point or another reference point; and the transmitting module 282 is configured to transmit a first positioning assistance message and a first PRS to the target terminal in the case that the apparatus is the absolute reference point, wherein the first positioning assistance message indicates a transmission mode of the first PRS; or the transmitting module 282 is configured to transmit a second positioning assistance message and a second PRS to the target terminal in the case that the apparatus is the another reference point, wherein the second positioning assistance message indicates a transmission mode of the second PRS.

In some embodiments, the first positioning assistance message further carries an absolute location of the absolute reference point; and the second positioning assistance message further carries at least one of: an absolute location of the another reference point, a relative location of the another reference point with respect to the absolute reference point, or a timing offset of the another reference point with respect to the absolute reference point.

In some embodiments, the second positioning assistance message carries differential information of the second positioning assistance message relative to the first positioning assistance message.

In some embodiments, the reference point is an absolute reference point or another reference point; and the transmitting module 282 is configured to transmit a third positioning assistance message and a first PRS to the target terminal in the case that the apparatus is the absolute reference point, wherein the third positioning assistance message indicates a transmission mode of the first PRS and a transmission mode of a second PRS by the another reference point; or the transmitting module 282 is configured to transmit the second PRS to the target terminal in the case that the reference point is the another reference point.

In some embodiments, the third positioning assistance message further carries at least one of: an absolute location of the absolute reference point, an absolute location of the another reference point, a relative location of the another reference point with respect to the absolute reference point, or a timing offset of the another reference point with respect to the absolute reference point.

In some embodiments, the transmission mode includes at least one of: a resource pool of the PRS; a transmission period of the PRS; a time domain location of a resource configured for a first transmission of the PRS during each transmission period; the number of transmissions of the PRS during each transmission period; a time interval between two adjacent transmissions of the PRS; a comb interval of the PRS; a frequency domain location of the PRS; a bandwidth of the PRS; or a sequence ID of the PRS.

In some embodiments, the apparatus further includes: a receiving module 284, configured to receive a transmission resource of the positioning assistance message allocated by a configuration node in the case that the apparatus is a first terminal, wherein the configuration node is a network device, the absolute reference point, or a second terminal; or a selecting module 286, configured to autonomously select a transmission resource of the positioning assistance message; wherein a resource pool to which the transmission resource of the positioning assistance message belongs is the same as, overlapped with, or different from a resource pool of a transmission resource of the PRS, the transmission resource of the PRS being configured to transmit a PSCCH and/or a PSSCH.

In some embodiments, the apparatus further includes: a receiving module 284, configured to receive a transmission resource of the PRS allocated by a configuration node in the case that the reference point is a first terminal, wherein the configuration node is a network device, the absolute reference point, or a second terminal.

In some embodiments, the apparatus further includes: a selecting module 286, configured to autonomously select a transmission resource of the PRS.

In some embodiments, the positioning assistance message is transmitted periodically.

In some embodiments, a transmission period of the positioning assistance message is greater than a transmission period of the PRS; or a transmission period of the positioning assistance message is greater than an integral multiple of a transmission period of the PRS; or a transmission period of the positioning assistance message is equal to an integral multiple of a transmission period of the PRS; or a transmission period of the positioning assistance message is equal to a transmission period of the PRS; wherein the positioning assistance message is transmitted no later than a transmission of the PRS indicated by the positioning assistance message.

In some embodiments, a sidelink resource of the positioning assistance message is spaced apart by a first duration from a transmission resource of the PRS indicated by the positioning assistance message, wherein the first duration is predefined by a communication protocol, or configured or pre-configured by a network device.

The positioning assistance message is transmitted in one-to-one correspondence prior to a transmission of the PRS indicated by the positioning assistance message.

A sidelink resource of the positioning assistance message is spaced apart by a second duration from a transmission resource of the PRS indicated by the positioning assistance message, wherein the second duration is predefined by a communication protocol, or configured or pre-configured by a network device.

In some embodiments, the transmission resource of the PRS indicated by the positioning assistance message is a reserved resource indicated by the positioning assistance message.

In some embodiments, the apparatus further includes a receiving module 284, configured to transmit the positioning assistance message and the PRS to the target terminal simultaneously in the case that a third PRS from the target terminal is received.

In some embodiments, the apparatus further includes: a processing module 288, configured to determine a sequence ID of the PRS based on a sequence ID of the third PRS.

In some embodiments, the sequence ID of the PRS is the same as the sequence ID of the third PRS; or the sequence ID of the PRS is a function of the sequence ID of the third PRS.

In some embodiments, the apparatus further includes: a processing module 288, configured to perform synchronization using the absolute reference point as a reference synchronization source in the case that the reference point is the another reference point.

In some embodiments, the positioning assistance message is RRC signaling, MAC signaling, or physical layer signaling.

In some embodiments, the positioning assistance message is transmitted in a unicast, multicast, or broadcast mode.

It is to be noted that the apparatuses provided in the above embodiments are only illustrated by taking the division of the above-described functional modules as an example, and in practice, the above-described functions are possibly assigned to be accomplished by different functional modules based on the need, i.e., the internal structure of the apparatus is possibly divided into different functional modules in order to accomplish all or part of the above-described functions.

With respect to the apparatus in the embodiments, the specific manner in which each module performs an operation has been described in detail in the embodiments of the methods and is not described in detail herein.

FIG. 29 is a structural schematic diagram of a communication device (a terminal device or a network device) according to some embodiments of the present disclosure. The communication device 2900 includes: a processor 2901, a receiver 2902, a transmitter 2903, a memory 2904, and a bus 2905.

The processor 2901 includes one or more processing cores, and the processor 2901 performs various functional applications and information processing by running software programs or modules.

In some embodiments, the receiver 2902 and the transmitter 2903 are realized as one communication assembly, which is one communication chip in some embodiments.

The memory 2904 is connected to the processor 2901 over the bus 2905. The memory 2904 is configured to store one or more instructions, and the processor 2901, when executing the one or more instructions, is caused to perform the various processes in the method embodiments described above.

In addition, the memory 2904 is implemented by any type of volatile or non-volatile storage device or a combination thereof, the volatile or non-volatile storage device including, but not limited to: a disk or optical disk, an electrically erasable programmable read only memory (EEPROM), an erasable programmable read-only memory (EPROM), a static random-access memory (SRAM), a read-only memory (ROM), a magnetic memory, a flash memory, and a programmable read-only memory (PROM).

In some embodiments, a non-transitory computer-readable storage medium is further provided. The non-transitory computer-readable storage medium stores at least one segment of program, wherein the at least one segment of the program, when loaded and run by a processor, causes the processor to perform the method for positioning an absolute location according to the above method embodiments.

In some embodiments, a chip is further provided. The chip includes a programmable logic circuitry and/or one or more program instructions, and the chip, when running on a communication device, is caused to perform the method for positioning an absolute location according to the above method embodiments.

In some embodiments, a computer program product is further provided. The computer program product, when run by a processor of a computer device, causes the computer device to perform the above method for positioning an absolute location.

It should be appreciated by those skilled in the art that, in one or more of the above embodiments, the functions described in the embodiments of the present disclosure can be performed using hardware, software, firmware, or any combination thereof. In the case that the embodiments are performed by software, the functions are stored in a non-transitory computer-readable medium or transmitted as one or more instructions or codes on the non-transitory computer-readable medium. The non-transitory computer-readable medium includes computer storage medium and communication medium, wherein the communication medium includes any medium that facilitates the transmission of a computer program from one location to another. The storage medium includes any usable medium to which a general-purpose or specialized computer has access.

The foregoing are only exemplary embodiments of this disclosure and are not intended to limit this disclosure. The extent of protection is defined by the claims.

**Claims**

**1.** A method for positioning an absolute location, applicable to a target terminal, **characterized by** comprising:

receiving (132) a positioning assistance message, wherein the positioning assistance message indicates a transmission mode of a positioning reference signal, PRS, the positioning assistance message is transmitted in one-to-one correspondence prior to a transmission of the PRS indicated by the positioning assistance message, and a sidelink resource of the positioning assistance message is spaced apart by a second duration from a transmission resource of the PRS indicated by the positioning assistance message, wherein the second duration is predefined by a communication protocol, or configured or pre-configured by a network device;
receiving (134) the PRS based on the positioning assistance message; and
calculating (136) an absolute positioned location of the target terminal based on the PRS.

2. The method according to claim 1, wherein the PRS and the positioning assistance message are proactively transmitted by reference points, wherein the reference points comprise one absolute reference point and at least two other reference points.

3. The method according to claim 1 or 2, wherein the transmission mode comprises at least one of:

a resource pool of the PRS;
a transmission period of the PRS;
a time domain location of a resource for a first transmission of the PRS during each transmission period;
a number of transmissions of the PRS during each transmission period;
a time interval between two adjacent transmissions of the PRS;
a comb interval of the PRS;
a frequency domain location of the PRS;
a bandwidth of the PRS; or
a sequence identifier, ID, of the PRS.

4. The method according to any one of claims 1 to 3, wherein the positioning assistance message is transmitted periodically.

5. The method according to claim 4, wherein a transmission period of the positioning assistance message is equal to a transmission period of the PRS;
wherein the positioning assistance message is transmitted no later than the transmission of the PRS indicated by the positioning assistance message.

6. A method for positioning an absolute location, applicable to a reference point, **characterized by** comprising:
transmitting (122) a positioning assistance message and a positioning reference signal, PRS, to a target terminal;
wherein the positioning assistance message indicates a transmission mode of the PRS, the PRS is configured to position an absolute location of the target terminal, the positioning assistance message is transmitted in one-to-one correspondence prior to a transmission of the PRS indicated by the positioning assistance message, and a sidelink resource of the positioning assistance message is spaced apart by a second duration from a transmission resource of the PRS indicated by the positioning assistance message, wherein the second duration is predefined by a communication protocol, or configured or pre-configured by a network device.

7. The method according to claim 6, wherein transmitting (122) the positioning assistance message and the PRS to the target terminal comprises:
transmitting the positioning assistance message and the PRS to the target terminal simultaneously in response to receiving a third PRS from the target terminal.

8. An apparatus for positioning an absolute location, **characterized by** comprising:

a receiving module (271), configured to receive a positioning assistance message, wherein the positioning assistance message indicates a transmission mode of a positioning reference signal, PRS, the positioning assistance message is transmitted in one-to-one correspondence prior to a transmission of the PRS indicated by the positioning assistance message, and a sidelink resource of the positioning assistance message is spaced apart by a second duration from a transmission resource of the PRS indicated by the positioning assistance message, wherein the second duration is predefined by a communication protocol, or configured or pre-configured by a network device; and receive the PRS based on the positioning assistance message; and
a processing module (273), configured to calculate an absolute positioned location of the apparatus based on the PRS.

9. The apparatus according to claim 8, the apparatus further comprising:
a transmitting module (275), configured to transmit a third PRS, wherein the positioning assistance message and the PRS are transmitted in response to a trigger of the third PRS, and the positioning assistance message and the PRS are transmitted simultaneously.

10. The apparatus according to claim 8 or 9, wherein the positioning assistance message is radio resource control, RRC, signaling, medium access control, MAC, signaling, or physical layer signaling.

11. The apparatus according to any one of claims 8 to 10, wherein the positioning assistance message is transmitted in a unicast, multicast, or broadcast mode.

12. An apparatus for positioning an absolute location, applicable to a reference point, **characterized by** comprising:
a transmitting module (282), configured to transmit a positioning assistance message and a positioning reference signal, PRS, to a target terminal;
wherein the positioning assistance message indicates a transmission mode of the PRS, the PRS is configured to position an absolute location of the target terminal, the positioning assistance message is transmitted in one-to-one correspondence prior to a transmission of the PRS indicated by the positioning assistance message, and a sidelink resource of the positioning assistance message is spaced apart by a second duration from a transmission resource of the PRS indicated by the positioning assistance message, wherein the second duration is predefined by a communication protocol, or configured or pre-configured by a network device.

13. A chip, wherein the chip comprises a programmable logic circuit or program, and the chip is **characterized in that** the chip is configured to perform:

receiving a positioning assistance message, wherein the positioning assistance message indicates a transmission mode of a positioning reference signal, PRS, the positioning assistance message is transmitted in one-to-one correspondence prior to a transmission of the PRS indicated by the positioning assistance message, and a sidelink resource of the positioning assistance message is spaced apart by a second duration from a transmission resource of the PRS indicated by the positioning assistance message, wherein the second duration is predefined by a communication protocol, or configured or pre-configured by a network device;
receiving the PRS based on the positioning assistance message; and
calculating an absolute positioned location of the target terminal based on the PRS.

**Patentansprüche**

1. Verfahren zum Bestimmen einer absoluten Position, anwendbar auf ein Zielendgerät, **dadurch gekennzeichnet, dass** es umfasst:

Empfangen (132) einer Positionierungsunterstützungsnachricht, wobei die Positionierungsunterstützungsnachricht einen Übertragungsmodus eines Positionierungsreferenzsignals, PRS, anzeigt, die Positionierungsunterstützungsnachricht in Eins-zu-Eins-Entsprechung vor einer Übertragung des durch die Positionierungsunterstützungsnachricht angezeigten PRS übertragen wird und eine Direktverbindungsressource der Positionierungsunterstützungsnachricht um eine zweite Dauer von einer Übertragungsressource des durch die Positionierungsunterstützungsnachricht angezeigten PRS beabstandet ist, wobei die zweite Dauer durch ein Kommunikationsprotokoll vordefiniert oder durch eine Netzvorrichtung konfiguriert oder vorkonfiguriert ist;
Empfangen (134) des PRS basierend auf der Positionierungsunterstützungsnachricht; und
Berechnen (136) einer absoluten bestimmten Position des Zielendgeräts basierend auf dem PRS.

2. Verfahren gemäß Anspruch 1, wobei das PRS und die Positionierungsunterstützungsnachricht durch Referenzpunkte proaktiv übertragen werden, wobei die Referenzpunkte einen absoluten Referenzpunkt und mindestens zwei weitere Referenzpunkte umfassen.

3. Verfahren gemäß Anspruch 1 oder 2, wobei der Übertragungsmodus wenigstens eines der folgenden umfasst:

einen Ressourcenpool des PRS;
einen Übertragungszeitraum des PRS;
eine Zeitbereichsposition einer Ressource für eine erste Übertragung des PRS während jedes Übertragungszeitraums;
eine Anzahl von Übertragungen des PRS während jedes Übertragungszeitraums;
ein Zeitintervall zwischen zwei benachbarten Übertragungen des PRS;
ein Kammintervall des PRS;
eine Frequenzbereichsposition des PRS;
eine Bandbreite des PRS; oder
einen Sequenzidentifikator, ID, des PRS.

4. Verfahren gemäß einem der Ansprüche 1 bis 3, wobei die Positionierungsunterstützungsnachricht periodisch übertragen wird.

5. Verfahren gemäß Anspruch 4, wobei ein Übertragungszeitraum der Positionierungsunterstützungsnachricht gleich einem Übertragungszeitraum des PRS ist;
wobei die Positionierungsunterstützungsnachricht nicht später als die Übertragung des durch die Positionierungsunterstützungsnachricht angezeigten PRS übertragen wird.

6. Verfahren zum Bestimmen einer absoluten Position, anwendbar auf einen Referenzpunkt, **dadurch gekennzeichnet, dass** es umfasst:

Übertragen (122) einer Positionierungsunterstützungsnachricht und eines Positionierungsreferenzsignals, PRS, an ein Zielendgerät;
wobei die Positionierungsunterstützungsnachricht einen Übertragungsmodus des PRS anzeigt, das PRS dafür ausgelegt ist, eine absolute Position des Zielendgeräts zu bestimmen, die Positionierungsunterstützungsnachricht in Eins-zu-Eins-Entsprechung vor einer Übertragung des durch die Positionierungsunterstützungsnachricht angezeigten PRS übertragen wird und eine Direktverbindungsressource der Positionierungsunterstützungsnachricht um eine zweite Dauer von einer Übertragungsressource des durch die Positionierungsunterstützungsnachricht angezeigten PRS beabstandet ist, wobei die zweite Dauer durch ein Kommunikationsprotokoll vordefiniert oder durch eine Netzvorrichtung konfiguriert oder vorkonfiguriert ist.

7. Verfahren gemäß Anspruch 6, wobei das Übertragen (122) der Positionierungsunterstützungsnachricht und des PRS an das Zielendgerät umfasst:
Übertragen der Positionierungsunterstützungsnachricht und des PRS an das Zielendgerät gleichzeitig als Reaktion auf den Empfang eines dritten PRS vom Zielendgerät.

8. Einrichtung zum Bestimmen einer absoluten Position, **dadurch gekennzeichnet, dass** sie umfasst:

ein Empfangsmodul (271), das dafür ausgelegt ist, eine Positionierungsunterstützungsnachricht zu empfangen, wobei die Positionierungsunterstützungsnachricht einen Übertragungsmodus eines Positionierungsreferenzsignals, PRS, anzeigt, die Positionierungsunterstützungsnachricht in Eins-zu-Eins-Entsprechung vor einer Übertragung des durch die Positionierungsunterstützungsnachricht angezeigten PRS übertragen wird und eine Direktverbindungsressource der Positionierungsunterstützungsnachricht um eine zweite Dauer von einer Übertragungsressource des durch die Positionierungsunterstützungsnachricht angezeigten PRS beabstandet ist, wobei die zweite Dauer durch ein Kommunikationsprotokoll vordefiniert oder durch eine Netzvorrichtung konfiguriert oder vorkonfiguriert ist; und Empfangen des PRS basierend auf der Positionierungsunterstützungsnachricht; und
ein Verarbeitungsmodul (273), das dafür ausgelegt ist, basierend auf dem PRS eine absolute bestimmte Position der Einrichtung zu berechnen.

9. Einrichtung gemäß Anspruch 8, wobei die Einrichtung ferner umfasst:
ein Übertragungsmodul (275), das dafür ausgelegt ist, ein drittes PRS zu übertragen, wobei die Positionierungsunterstützungsnachricht und das PRS als Reaktion auf eine Auslösung des dritten PRS übertragen werden und die Positionierungsunterstützungsnachricht und das PRS gleichzeitig übertragen werden.

10. Einrichtung gemäß Anspruch 8 oder 9, wobei die Positionierungsunterstützungsnachricht eine Funkressourcensteuerungs, RRC (Radio Resource Control), -Signalisierung, Medienzugriffssteuerungs, MAC (Medium Access Control), -Signalisierung oder Signalisierung der physikalischen Schicht ist.

11. Einrichtung gemäß einem der Ansprüche 8 bis 10, wobei die Positionierungsunterstützungsnachricht in einem Unicast-, Multicast- oder Broadcast-Modus übertragen wird.

12. Einrichtung zum Bestimmen einer absoluten Position, anwendbar auf einen Referenzpunkt, **dadurch gekennzeichnet, dass** sie umfasst:

ein Übertragungsmodul (282), das dafür ausgelegt ist, eine Positionierungsunterstützungsnachricht und ein Positionierungsreferenzsignal, PRS, an ein Zielendgerät zu übertragen;
wobei die Positionierungsunterstützungsnachricht einen Übertragungsmodus des PRS anzeigt, das PRS dafür ausgelegt ist, eine absolute Position des Zielendgeräts zu bestimmen, die Positionierungsunterstützungsnachricht in Eins-zu-Eins-Entsprechung vor einer Übertragung des durch die Positionierungsunterstützungsnachricht angezeigten PRS übertragen wird und eine Direktverbindungsressource der Positionierungsunterstützungsnachricht um eine zweite Dauer von einer Übertragungsressource des durch die Positionierungsunterstützungsnachricht angezeigten PRS beabstandet ist, wobei die zweite Dauer durch ein Kommunikationsprotokoll vordefiniert oder durch eine Netzvorrichtung konfiguriert oder vorkonfiguriert ist.

13. Chip, wobei der Chip eine programmierbare Logikschaltung oder ein Programm umfasst und der Chip **dadurch gekennzeichnet ist, dass** der Chip ausgelegt ist zum:

Empfangen einer Positionierungsunterstützungsnachricht, wobei die Positionierungsunterstützungsnachricht einen Übertragungsmodus eines Positionierungsreferenzsignals, PRS, anzeigt, die Positionierungsunterstützungsnachricht in Eins-zu-Eins-Entsprechung vor einer Übertragung des durch die Positionierungsunterstützungsnachricht angezeigten PRS übertragen wird und eine Direktverbindungsressource der Positionierungsunterstützungsnachricht um eine zweite Dauer von einer Übertragungsressource des durch die Positionierungsunterstützungsnachricht angezeigten PRS beabstandet ist, wobei die zweite Dauer durch ein Kommunikationsprotokoll vordefiniert oder durch eine Netzvorrichtung konfiguriert oder vorkonfiguriert ist;
Empfangen des PRS basierend auf der Positionierungsunterstützungsnachricht; und
Berechnen einer absoluten bestimmten Position des Zielendgeräts basierend auf dem PRS.

**Revendications**

1. Procédé de positionnement d'une localisation absolue, applicable à un terminal cible, **caractérisé en ce qu'**il comprend :

la réception (132) d'un message d'assistance de positionnement, dans lequel le message d'assistance de positionnement indique un mode de transmission d'un signal de référence de positionnement, « Positioning Reference Signal » PRS, le message d'assistance de positionnement est transmis en une correspondance une-à-une avant une transmission du PRS indiqué par le message d'assistance de positionnement, et une ressource de liaison latérale du message d'assistance de positionnement est espacée par une seconde durée d'une ressource de transmission du PRS indiqué par le message d'assistance de positionnement, dans lequel la seconde durée est prédéfinie par un protocole de communication, ou configurée ou préconfigurée par un dispositif de réseau ;
la réception (134) du PRS sur la base du message d'assistance de positionnement ; et
le calcul (136) d'une localisation positionnée absolue du terminal cible sur la base du PRS.

2. Procédé selon la revendication 1, dans lequel le PRS et le message d'assistance de positionnement sont transmis proactivement par des points de référence, dans lequel les points de référence comprennent un point de référence absolu et au moins deux autres points de référence.

3. Procédé selon la revendication 1 ou 2, dans lequel le mode de transmission comprend au moins un élément parmi :

une réserve de ressources du PRS ;
une période de transmission du PRS ;
une localisation en domaine temporel d'une ressource pour une première transmission du PRS durant chaque période de transmission ;
un nombre de transmissions du PRS durant chaque période de transmission ;
un intervalle temporel entre deux transmissions adjacentes du PRS ;
un intervalle de peigne du PRS ;

une localisation en domaine fréquentiel du PRS ;
une largeur de bande du PRS ; ou
un identifiant, ID, de séquence du PRS.

4. Procédé selon l'une quelconque des revendications 1 à 3, dans lequel le message d'assistance de positionnement est transmis périodiquement.

5. Procédé selon la revendication 4, dans lequel une période de transmission du message d'assistance de positionnement est égale à une période de transmission du PRS ;
dans lequel le message d'assistance de positionnement est transmis non ultérieurement à la transmission du PRS indiqué par le message d'assistance de positionnement.

6. Procédé de positionnement d'une localisation absolue, applicable à un point de référence, **caractérisé en ce qu'**il comprend :

la transmission (122) d'un message d'assistance de positionnement et d'un signal de référence de positionnement, « Positioning Reference Signal » PRS, à un terminal cible ;
dans lequel le message d'assistance de positionnement indique un mode de transmission du PRS, le PRS est configuré pour positionner une localisation absolue du terminal cible, le message d'assistance de positionnement est transmis en une correspondance une-à-une avant une transmission du PRS indiqué par le message d'assistance de positionnement, et une ressource de liaison latérale du message d'assistance de positionnement est espacée par une seconde durée d'une ressource de transmission du PRS indiqué par le message d'assistance de positionnement, dans lequel la seconde durée est prédéfinie par un protocole de communication, ou configurée ou préconfigurée par un dispositif de réseau.

7. Procédé selon la revendication 6, dans lequel la transmission (122) du message d'assistance de positionnement et du PRS au terminal cible comprend :
la transmission du message d'assistance de positionnement et du PRS au terminal cible simultanément en réponse à la réception d'un troisième PRS en provenance du terminal cible.

8. Appareil de positionnement d'une localisation absolue, **caractérisé en ce qu'**il comprend :

un module de réception (271), configuré pour recevoir un message d'assistance de positionnement, dans lequel le message d'assistance de positionnement indique un mode de transmission d'un signal de référence de positionnement, « Positioning Reference Signal » PRS, le message d'assistance de positionnement est transmis en une correspondance une-à-une avant une transmission du PRS indiqué par le message d'assistance de positionnement, et une ressource de liaison latérale du message d'assistance de positionnement est espacée par une seconde durée d'une ressource de transmission du PRS indiqué par le message d'assistance de positionnement,
dans lequel la seconde durée est prédéfinie par un protocole de communication, ou configurée ou préconfigurée par un dispositif de réseau ; et recevoir le PRS sur la base du message d'assistance de positionnement ; et
un module de traitement (273), configuré pour calculer une localisation positionnée absolue de l'appareil sur la base du PRS.

9. Appareil selon la revendication 8, l'appareil comprenant en outre :
un module de transmission (275), configuré pour transmettre un troisième PRS, dans lequel le message d'assistance de positionnement et le PRS sont transmis en réponse à un déclenchement du troisième PRS, et le message d'assistance de positionnement et le PRS sont transmis simultanément.

10. Appareil selon la revendication 8 ou 9, dans lequel le message d'assistance de positionnement est une signalisation de contrôle de ressources radio, « Radio Resource Control » RRC, une signalisation de contrôle d'accès au support, « Medium Access Control » MAC, ou une signalisation de couche physique.

11. Appareil selon l'une quelconque des revendications 8 à 10, dans lequel le message d'assistance de positionnement est transmis dans un mode à diffusion individuelle, à diffusion multiple, ou à radiodiffusion.

12. Appareil de positionnement d'une localisation absolue, applicable à un point de référence, **caractérisé en ce qu'**il comprend :

un module de transmission (282), configuré pour transmettre un message d'assistance de positionnement et un signal de référence de positionnement, « Positioning Reference Signal » PRS, à un terminal cible ;

dans lequel le message d'assistance de positionnement indique un mode de transmission du PRS, le PRS est configuré pour positionner une localisation absolue du terminal cible, le message d'assistance de positionnement est transmis en une correspondance une-à-une avant une transmission du PRS indiqué par le message d'assistance de positionnement, et une ressource de liaison latérale du message d'assistance de positionnement est espacée par une seconde durée d'une ressource de transmission du PRS indiqué par le message d'assistance de positionnement, dans lequel la seconde durée est prédéfinie par un protocole de communication, ou configurée ou préconfigurée par un dispositif de réseau.

13. Puce, dans laquelle la puce comprend un circuit ou programme de logique programmable, et la puce est **caractérisée en ce que** la puce est configurée pour réaliser :

la réception d'un message d'assistance de positionnement, dans laquelle le message d'assistance de positionnement indique un mode de transmission d'un signal de référence de positionnement, « Positioning Reference Signal » PRS, le message d'assistance de positionnement est transmis en une correspondance une-à-une avant une transmission du PRS indiqué par le message d'assistance de positionnement, et une ressource de liaison latérale du message d'assistance de positionnement est espacée par une seconde durée d'une ressource de transmission du PRS indiqué par le message d'assistance de positionnement, dans laquelle la seconde durée est prédéfinie par un protocole de communication, ou configurée ou préconfigurée par un dispositif de réseau ;

la réception du PRS sur la base du message d'assistance de positionnement ; et

le calcul d'une localisation positionnée absolue du terminal cible sur la base du PRS.

FIG. 1

FIG. 2

FIG. 3

FIG. 4

FIG. 5

FIG. 6

Start
Symbol

Length
Symbol

Frequ-
ency

Time

0 1 2 3 4 5 6 7 8 9 10 11 12 13

PSCCH  PSSCH  PSFCH  GP  Symbols not available
for sidelink

FIG. 7

AGC configured for
reception of PSFCH

| A G C | D M R S | | | D M R S | PSSCH | D M R S | | | GP | | P S F C H | GP |
| | PSCCH | | | | | | | | | | | | |

FIG. 8

| A G C | D M R S | | | D M R S | | | D M R S | | | D M R S | | | G A P |
| | PSCCH | | | | | | | | | | | | | | | |

FIG. 9

RE#0    RE#2    RE#4    RE#6    RE#8    RE#10

| P-ort 0/ P-ort 1 | | P-ort 0/ P-ort 1 | | P-ort 0/ P-ort 1 | | P-ort 0/ P-ort 1 | | P-ort 0/ P-ort 1 | | P-ort 0/ P-ort 1 | |

RE#1    RE#3    RE#5    RE#7    RE#9    RE#11

FIG. 10

Absolute reference point

Another reference point 1

Target terminal

Another reference point 2

FIG. 11

122

122: Transmitting a positioning assistance message and a PRS to a target terminal

FIG. 12

132

132: Receiving a positioning assistance message

134

134: Receiving a PRS based on the positioning assistance message

136

136: Calculating an absolute positioned location based on the PRS

FIG. 13

Absolute reference point 141

Another reference point 142

Another reference point 143

Target terminal 144

First positioning assistance message

First PRS

Second positioning assistance message

Second PRS

Second positioning assistance message

Second PRS

FIG. 14

Absolute reference point 141

Another reference point 142

Another reference point 143

Target terminal 144

Third positioning assistance message

First PRS

Second PRS

Second PRS

FIG. 15

The target terminal transmits a third PRS $T_1$

The reference point receives the third PRS $T_2$

Td

The reference point transmits a positioning assistance message $T_3$

The reference point transmits a PRS $T_4$

The target terminal receives the PRS $T_5$

FIG. 16

Reference point

Target terminal

▨ Positioning assistance message ▢ PRS

FIG. 17

Reference point

Target terminal

▨ Positioning assistance message ▢ PRS

FIG. 18

resource pool of SL-PRS

Frequency

Slot

FIG. 19

Frequency

PSSCH
(Positioning
assistance
message)

PSCCH

Slots available
for
transmission
of PRS

Time

FIG. 20

Absolute reference point 141

Another reference point 142

Target terminal 144

Another reference point 143

Positioning
assistance
message

PRS

FIG. 21

Absolute reference point 141

Another reference point 142

Target terminal 144

Another reference point 143

Positioning
assistance
message

PRS

FIG. 22

Absolute reference point 141

Another reference point 142

Target terminal 144

Another reference point 143

Positioning assistance message ▮ PRS ☐

FIG. 23

Absolute reference point 141

Another reference point 142

Target terminal 144

Another reference point 143

Positioning assistance message ▮ PRS ☐

FIG. 24

Absolute reference point 141

Another reference point 142

Target terminal 144

Another reference point 143

Positioning assistance message ▮ PRS ☐

FIG. 25

Absolute reference point 141

Another reference point 142

Target terminal 144

Another reference point 143

Positioning assistance message

PRS

FIG. 26

Processing module 273

Receiving module 271

Transmitting module 275

FIG. 27

Receiving module 284

Transmitting module 282 — Processing module 288

Selecting module 286

FIG. 28

## Communication device 2900

Processor 2901

Transmitter 2903

Bus 2905

Receiver 2902

Memory 2904

FIG. 29

**REFERENCES CITED IN THE DESCRIPTION**

**Patent documents cited in the description**

- WO 2021167715 A1
- WO 2021232228 A1
- CN 114222931 A
- US 20220077990 A1